(19) Europäisches Patentamt
European Patent Office
Office européen des brevets

(11) EP 1 160 274 B1

(12) **EUROPEAN PATENT SPECIFICATION**

(45) Date of publication and mention of the grant of the patent:
**05.10.2005 Bulletin 2005/40**

(21) Application number: **99959785.9**

(22) Date of filing: **10.12.1999**

(51) Int Cl.7: **C08J 9/16**, C08J 9/228, B32B 5/18, B29C 44/00, B29C 44/14, B32B 27/36

(86) International application number:
**PCT/JP1999/006986**

(87) International publication number:
**WO 2000/036000 (22.06.2000 Gazette 2000/25)**

(54) **PRE-EXPANDED PARTICLES OF CRYSTALLINE AROMATIC POLYESTER-BASED RESIN, AND IN-MOLD EXPANDED PRODUCT AND EXPANDED LAMINATE USING THE SAME**

VORGESCHÄUMTE TEILCHEN AUS KRISTALLINEM AROMATISCHEM POLYESTERHARZ, IN DER FORM EXPANDIERTES PRODUKT UND DARAUS HERGESTELLTES EXPANDIERTES LAMINAT

PARTICULES PRE-EXPANSEES EN RESINE DE POLYESTER AROMATIQUE CRISTALLIN, PRODUIT EXPANSE DANS LE MOULE ET LAMINE EXPANSE AINSI REALISE

(84) Designated Contracting States:
**AT BE CH CY DE DK ES FI FR GB GR IE IT LI LU MC NL PT SE**

(30) Priority:
**11.12.1998 JP 35332798**
**11.12.1998 JP 35332898**
**10.03.1999 JP 6359799**
**01.07.1999 JP 18782399**
**15.07.1999 JP 20191099**
**09.09.1999 JP 25588799**

(43) Date of publication of application:
**05.12.2001 Bulletin 2001/49**

(73) Proprietor: **Sekisui Plastics Co., Ltd.**
**Osaka 530-0047 (JP)**

(72) Inventors:
- **HIRAI, Takaaki**
**Tenri-shi Nara 632-0072 (JP)**
- **FUJISHIMA, Minoru**
**Ikoma-shi Nara 630-0243 (JP)**
- **UENO, Hiroyuki**
**Nara-shi Nara 630-8114 (JP)**
- **MATSUMURA, Hideyasu**
**Moriyama-shi Shiga 524-0022 (JP)**
- **MORIOKA, Ikuo**
**Omihachiman-shi Shiga 523-0041 (JP)**
- **NAKAYAMA, Shinpei**
**Soraku-gun Kyoto 619-0222 (JP)**

(74) Representative: **HOFFMANN EITLE**
**Patent- und Rechtsanwälte**
**Arabellastrasse 4**
**81925 München (DE)**

(56) References cited:
**EP-A- 0 442 759**
**EP-A- 0 547 033**
**EP-A- 0 924 243**
**EP-A2- 0 442 759**
**JP-A- 8 174 590**
**US-A- 5 475 037**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

TECHNICAL FIELD

The present invention relates to a crystalline aromatic polyester resin prepuff which is superior in expansion and fusion during cavity-molding. It also relates to a molded foam article and a laminated molded foam article, using the prepuff, wherein its fusion ratio and mechanical strength are particularly improved.

BACKGROUND OF THE INVENTION

An aromatic polyester resin has excellent properties, which are not obtainable in polystyrene or polyolefin products, such as toughness, dimensional stability and heat- and chemical-resistance.
Therefore, trials to produce a cavity-molded foam article, which is lightweight and has excellent heat resistance, insulating properties, cushioning properties and chemical resistance have been made by molding the aromatic polyester resin.
Conventionally, among aromatic polyester resins, general purpose PET has been widely used which is synthesized by the polycondensation reaction of terephthalic acid as the dicarboxylic acid and ethylene glycol as the diol.
As a process for producing a molded foam article of the general purpose PET, for example, a process can be suggested in the same manner as in the case of polystyrene or polyolef in, of producing expandable beads by impregnating resin particles with a blowing agent (impregnating step), heating to pre-expand the expandable beads (pre-expanding step), and filling a mold cavity with the pre-expanded beads and heating to further expand and to fuse the pre-expanded beads, thereby producing a molded foam article (molding step).
However, the aromatic polyester resin including the general purpose PET generally has high gas barrier properties and so requires a long time to be impregnated with the blowing agent, thereby causing a problem that the above-described process would require longer time, more labor and higher producing cost as a result.
Since the pre-expanded beads of the general purpose. PET have a low crystallization peak temperature of less than 130° C (about 266° F) and its crystallization rate is fast, the crystallization is liable to be accelerated and its crystallinity becomes excessively high when the beads are heated during impregnation step and pre-expanding step.
Pre-expanded beads having a crystallinity of more than 25% cannot be fused at all, when they are heated for further expansion and fusion in a mold cavity.
Publication of Unexamined Patent Application No. JP 51-50365, A (1976) describes a potentially foamable polyester fiber produced by impregnating an unstretched fiber, which is obtained by wet spinning or dry spinning of a general purpose PET, with a low-boiling point liquid which is insoluble or slightly soluble in the general purpose PET. This publication also reports that a polyester foam was obtained by heating the potentially foamable polyester fiber to the temperature higher than its plastication temperature.
The above publication describes that, with the general purpose PET used, it is preferred to impregnate with a low-boiling point liquid over an extended time. Since the impregnation was actually conducted under heating within a range of from 90 to 150° C for 4 to 5 hours or more, it can be easily assumed that the crystallinity exceeds 25%. It is also apparent that this process requires a longer time, more labor and a higher production cost consequently.
Further the above publication does not describe cavity molding a molded foam article and prepuffs to be used therefore.
If prepuffs of general purpose PET are produced by this process, it is hard to expect that the prepuffs can be fused well with each other during cavity-molding, as the crystallinity of the general purpose PET is considered to have become excessively high as the result of heating for a long time, as described above.
Therefore, the above process cannot produce a good cavity-molded foam article of general purpose PET.
Mr. Hirai, one of the present inventors, has previously suggested a process of using foamed particles as prepuffs whose crystallinity is controlled to 25% or less, which are produced by mixing a general purpose PET with a blowing agent in a molten state under high pressure' using an extruder, extruding the mixture into atmospheric air, foaming the extruded mixture and cutting the resulting foamed extrudate, filling a mold cavity with the prepuffs, and conducting molding of the prepuffs {Publication of Unexamined Patent Application No. JP, 08-174590, A (1996)}.
According to this process, the crystallinity of the prepuffs can be controlled to 25% or less, thereby making it possible to conduct molding of the prepuffs in a mold cavity and to obtain a lightweight molded foam article having excellent heat resistance.
In the cavity-molding process, however, the general purpose PET is used and, therefore, the crystallization rate is considered very fast.
Accordingly, the fusion of prepuffs can be improved to some degree (up to about 30% in fusion ratio), thereby making it possible to produce a cavity-molded foam article. However, it was extremely difficult to produce a molded foam article having the improved fusion ratio of 40% or above and excellent mechanical strength.

This reason is as follows. That is, since the general purpose PET is used, the crystallization is accelerated by heating in the following two steps (1) and (2). The subsequent study made it clear that the acceleration of the crystallization in the step (2) exerts a particularly large influence on the fusion of prepuffs.

(1) Step of extrusion foaming for producing a prepuffs (this foamed extrudate is cut to prepare prepuffs).
(2) Step of filling a mold cavity with the prepuffs and conducting molding of the prepuffs. Since crystallization proceeds while prepuffs are heated during cavity-molding, the fusion between the prepuffs each other is inhibited.

EP 0 924 243 A2 relates to a foamed cellular material derived from aromatic polyester resins obtainable from aromatic polyester foamed cellular material having a bulk density of 0.05 to 0.7 g/cm$^2$ by heating under vacuum at temperatures higher than the Tg of the material and lower than the melting point thereof for a time sufficient to achieve a decrease in bulk density of at least 30%. Preferably, the foamed cellular material has a degree of crystallinity of less than 15%.

EP 0 442 759 A2 describes a process of producing a thermoplastic polyester series resin foamed material which comprises heating and further foaming a thermoplastic polyester resin foamed material having a crystallinity of not higher than 30% by bringing into contact with water or steam of at least 60°C and then heating the foamed material by bringing into contact with a heating medium other than water of at least 100°C to.further foaming the foamed material.

EP 0 547 033 A2 relates to a food container which is produced by laminating a non-foam film of a thermoplastic resin on at least one side of the foam sheet of a thermoplastic polyester resin having a degree of crystallinity of 15% or more to obtain a laminated sheet, and molding the laminated sheet into a container in such a manner that the non-foam film is positioned inside the container.

US 5,475,037 relates to a low density foam having a density less than 15 pounds per cubic foot (240 kg/m3) which is formed from an amorphous polyethylene terephthalate polymer. An expandable resin composition is also disclosed comprising an amorphous polyethylene terephthalate polymer and a blowing agent mixture comprising a low permeability blowing agent and a high solubility blowing agent. The low density foam is produced by a method wherein an amorphous polyethylene terephthalate polymer is expanded, said method comprising: adding a blowing agent mixture comprising a low permeability blowing agent and a high solubility blowing agent to said polymer thereby forming a resin and expanding said resin to produce said foam.

If the above-described problems are solved, it is expected that the molded foam article of the aromatic polyester resin finds its way into variety of applications such as building materials, construction materials, industrial parts, automotive parts, etc., as a more highly functional material than that of conventional polystyrene or polyolefin products taking advantage of the excellent characteristics of aromatic polyester resins described above.

A primary object of the present invention is to provide a moldable, crystalline aromatic polyester resin prepuff, which can be further expanded and fused well during molding in cavity and can make a molded foam article having an excellent mechanical strength in an easy and efficient manner.

Another object of the present invention is to provide a molded foam article, having good fusion between prepuffs, high mechanical strength and also a good appearance, using the above crystalline aromatic polyester resin prepuff.

Still another object of the present invention is to provide a novel laminated molded foam article comprising the above molded foam article and a layer of an aromatic polyester resin, wherein the molded foam article is laminated with the aromatic polyester resin layer at least on one surface thereof.

DISCLOSURE OF THE INVENTION

The present invention relates to a moldable, crystalline aromatic polyester resin prepuff in the form of particles, its bulk density being in the range of from 0.01 to 1.0 g/cm$^3$, its crystallization peak temperature being in the range of from 130 to 180°C and its crystallinity being in the range of from 1 to 6%, wherein the crystalline aromatic polyester resin contains at least one unit of a unit derived from isophthalic acid or a unit derived from 1,4-cyclohexanedimethanol in a total amound ranging from 0.6 to 9% by weight.

The present invention also relates to a molded foam article of the crystalline aromatic polyester resin, made by filling a mold cavity formed by closing male and female mold members of a mold with the crystalline aromatic polyester resin prepuffs, and heating to further expand and fuse the prepuffs in the mold cavity.

The present invention, furthermore, relates to a laminated molded foam article of the crystalline aromatic polyester resin, the molded foam article being laminated with an aromatic polyester resin film or sheet at least on one surface thereof.

The crystalline aromatic polyester resin prepuff of the present invention is a prepuff prepared from a modified aromatic polyester resin, whose crystallization rate is decelerated in comparison with a conventional general purpose PET. Furthermore, the crystallization peak temperature of this crystalline aromatic polyester resin prepuff is in the range

of from 130 to 180° C, higher than that of the prepuff made of the general purpose PET, and so its crystallization rate is to be decelerated. Therefore, rapid increase in crystallinity can be inhibited when the prepuff is heated during the manufacturing step of the prepuff or the subsequent molding step, thereby improving the fusion between the prepuffs remarkably when molded in a cavity.

With using the crystalline aromatic polyester resin prepuff of the present invention, therefore, the fusion between the prepuffs during cavity-molding can be improved, thereby making it possible to easily produce a molded foam of the crystalline aromatic polyester resin having a high fusion ratio and improved mechanical strength.

The molded foam article of the present invention is not only superior in fusion between the prepuffs and mechanical strength, but has a good appearance due to the prepuffs being expanded and fused well.

Furthermore, the laminated molded foam article of the present invention is obtained by laminating the molded foam article with a film or sheet of an aromatic polyester resin. In this manner, the laminated molded foam article is superior in printability due to a smooth surface and is also superior in appearance.

The laminated molded foam article obtained is one of the most preferred embodiments of the laminated molded foam article of the present invention, wherein a film or sheet of the aromatic polyester resin was laminated onto the molded foam by heat, without an adhesive, which is preferred from a recycling aspect.

As one embodiment of the present invention, the molded foam of the crystalline aromatic polyester resin can be laminated with the aromatic polyester resin layer with a polyester type adhesive being used, which is also preferable a recycling viewpoint.

## BEST MODE FOR CARRYING OUT THE INVENTION

### Prepuff

It is necessary that the crystalline aromatic polyester resin prepuff of the present invention has a crystallization peak temperature in the range of from 130 to 180 ° C. Since the crystallization peak temperature means the temperature at which the crystallization speed becomes maximum by heating, the higher the peak temperature, the lower the crystallization rate. As described previously, a prepuff made of the general purpose PET has a crystallization peak temperature of not more than 130° C and has a very high crystallization rate. On the other hand, the prepuff having a crystallization peak temperature of not less than 130° C of the present invention has a lower crystallization rate than that of the prepuff made of the general purpose PET, thereby making it possible to control the crystallinity lower and to properly inhibit the crystallization from proceeding during a molding stage. Therefore, a molded foam article having excellent appearance and strength can be produced by improving the fusion between the prepuffs during molding.

On the other hand, the prepuff having a crystallization peak temperature higher than 180° C can not impart the desired heat resistance to the molded foam article, because such prepuffs are slow to crystallize and can hardly be crystallized during molding. In addition, the range of the molding conditions becomes narrow, thereby making it difficult to conduct molding, or the prepuff can hardly be crystallized during molding. As a result, shrinkage of the molded foam article or poor appearance is liable to occur. Further, a problem arises that a laminated molded foam article having good appearance is difficult to obtain.

In order that good molded foam articles and good laminated molded foam articles are produced in light of the above-described facts, the crystallization peak temperature of the crystalline aromatic polyester resin prepuff should preferably be within a range of from about 132 to 170° C, and more preferably from about 135 to 160° C.

The crystallization peak temperature was measured by using a differential scanning calorimetry (DSC) in accordance with the measuring procedure defined in the Japanese Industrial Standard No. JIS $K7121_{-1987}$ "Testing Method for Transition Temperatures of Plastics".

Specifically, a predetermined amount of a prepuff is set in a measuring container of DSC and heated to 280° C at a heating rate of 10° C/min and, after maintaining at the same temperature (280° C) for 10 minutes, the sample is left to cool to room temperature (23° C) . Thereafter, the crystallization peak temperature is measured by heating the sample again at a heating rate of 10° C/min.

In order to control the crystallization peak temperature of the prepuff within the above range, the crystalline aromatic polyester resin constituting the prepuff is modified by changing the element of the dicarboxylic acid and/or the diol.

Specifically, isophthalic acid represented by the formula (1):

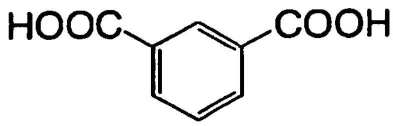

(1)

can be used as dicarboxylic acid, or 1,4-cyclohexanedimethanol represented by the formula (2):

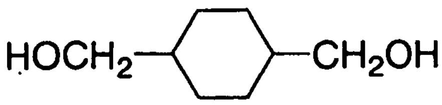

(2)

can be used as diol, which may be used either singly or combination. The total content of a unit derived from isophthalic acid (hereinafter referred as IPA unit) and/or a unit derived from 1,4-cyclohexanedimethanol (hereinafter referred as CHDM unit) in the crystalline aromatic polyester resin is within a range of from 0.6 to 9% by weight.

When the total content of the IPA unit and/or CHDM unit is smaller than 0.5% by weight, the effect of inhibiting the crystallization is not exerted. On the other hand, when the content of the IPA unit and/or CHDM unit exceeds 10% by weight, the crystallization rate becomes too slow. In either case, a molded foam article or a laminated molded foam article, having a good appearance, strength, and heat-resistance can not be produced as already described.

In order that good molded foam articles and good laminated molded foam articles can be produced in light of the above-described facts, the content of the IPA unit and/or CHDM unit is from about 0.6 to 9.0% by weight, and preferably from about 0.7 to 8.0% by weight.

Among other components constituting the crystalline aromatic polyester resin of the present invention, terephthalic acid and phthalic acid can be included as dicarboxylic acid for example, in addition to isophthalic acid and 1,4-cyclohexanedimethanol.

The diol component of the present invention can include, for example, ethylene glycol, α-butylene glycol (1,2-butanediol), β-butylene glycol (1,3-butanediol), tetramethylene glycol (1,4-butanediol), 2,3-butylene glycol (2,3-butanediol), neopentyl glycol or the like.

The material for crystalline aromatic polyester resin may contain a small amount of a polyhydric (tri- or polyhydric) carboxylic acid or an anhydride thereof as an acid component (e.g. tricarboxylic acid such as trimellitic acid, tetracarboxylic acid such as pyromellitic acid, etc.) and a polyhydric (tri- or polyhydric) alcohol as an alcohol component (e.g. triol such as glycerin, tetraol such as pentaerythritol, etc.), in addition to the respective components described above, in such manner that the crystallization peak temperature of the crystalline aromatic polyester resin does not deviate from the range of from 130 to 180° C.

The crystalline aromatic polyester resin used in the present invention is produced by a polycondensation reaction, in such manner that the total content of the IPA unit and/or CHDM unit is within a range of from 0.6 to 9% by weight of the crystalline aromatic polyester resin.

The crystalline aromatic polyester resin of the present invention can also be produced by formulating:

(1) a crystalline aromatic polyester resin having a crystallization peak temperature of lower than 130° C (resin wherein the content of the IPA unit and/or CHDM unit is, for example, smaller than 0.5% by weight), and
(2) at least one selected from the group consisting of a crystalline aromatic polyester resin having a crystallization peak temperature of not less than 130° C and an amorphous aromatic polyester resin (resin wherein the content of the IPA unit and/or CHDM unit is, for example, not less than 0.5% by weight) in such manner that the total content of the IPA unit and/or CHDM unit in the total resin is within a range of from 0.6 to 9% by weight, and mixing the resins under heat in an extruder.

According to this process, the content of the above both units in the prepuff and the crystallization peak temperature of the prepuff can be adjusted, by controlling the quantity of two or more aromatic polyester resins having different contents of the IPA unit and/or CHDM unit in the production of the prepuff. Therefore, there is an advantage that the crystallization peak temperature of the prepuff can be controlled and adjusted easily in response to the change of specifications.

A recycled material of a PET bottle can also be used as a kind of the crystalline aromatic polyester resin to be mixed, which is another advantage of the present invention from the recycling viewpoint.

In the above process, the respective resins are preferably molten and mixed sufficiently under heating so that

two or more aromatic polyester resins are converted into an alloy by the ester exchange reaction between them to make a uniform crystalline aromatic polyester resin.

In case where the prepuff is produced by cutting the foamed extrudate, which is produced by mixing the crystalline aromatic polyester resin with a blowing agent in a molten state under high pressure using an extruder, and the mixture is extrusion foamed, it is effective and preferred to make a uniform crystalline aromatic polyester resin by melting and mixing two or more aromatic polyester resins in the above extruder.

The uniform crystalline aromatic polyester resin may be previously made by melting and mixing two or more resins using another apparatus.

Published Japanese Translation of PCT International Publication for Patent Application No. JP 06-505452, A (1994) describes that a foamed article is produced only by extrusion foaming of an aromatic polyester resin containing isophthalic acid of 20% or less. Published Japanese Translation of PCT International Publication for Patent Applications No. JP 05-507761, A (1993) and No. JP 05-507762, A (1993) each describes that a high-molecular weight polyester resin to be used in unfoamed blow molding is produced by melting and mixing a low-molecular weight aromatic polyester resin containing an IPA unit of 25% or less and an additive for modification, forming the mixture into pellets and modifying the pellets. Furthermore, Publication of Unexamined Patent Application No. JP 04-278346, A (1992) describes a unfoamed laminated film produced by laminating a layer of an aromatic polyester resin containing 1 to 80 mol% of isophthalic acid in a dicarboxylic acid component with a layer of an aromatic polyester resin containing 1 to 80 mol% of. 1, 4-cyclohexanedimethanol in a diol component due to melt extrusion.

However, none of these publications disclose that an aromatic polyester resin is used as a prepuff for molding. Furthermore, none of these publications describe that the content of the above both components is specified within a range of from 0.5 to 10% by weight so as to secure good molding fusion by defining the crystallization peak temperature of the prepuff within a range of from 130 to 180° C by weight.

In the present invention, it is also one of constituent features to provide a molded foam article having excellent heat resistance and appearance because the content of the above respective components is specified to 10% by weight or less.

In view of melting and mixing properties in case of producing the prepuff and the moldability in case of molding the molded foam article using the produced prepuff, the aromatic crystalline polyester resin used in the present invention preferably has an inherent viscosity (temperature of measurement: 35° C, solvent medium: ortho-chlorophenol) of about 0.6 to 1.5.

In the present invention, the following additives can be added to the crystalline aromatic polyester resin.

The additive includes, for example, melt tension modifiers, flame retardants, antistatic agents, pigments, expansion nucleating agents, antioxidants, etc., in addition to blowing agents.

As the blowing agent, any of chemical and physical blowing agents can be used.

The chemical blowing agent, which is decomposed at the temperature higher than the softening point of the aromatic polyester resin, can include azodicarbonamide, dinitropentamethylenetetramine, hydrazoldicarbonamide, sodium bicarbonate or the like.

The physical blowing agent can include, for example, saturated hydrocarbon such as propane, n-butane, isobutane, n-pentane, isopentane, cyclopentane, hexane, etc.; halogenated hydrocarbon such as methyl chloride, Freon®, etc. ; and an ether compound such as dimethyl ether, methyl-tert-butyl ether, etc.

Furthermore, an inorganic gas such as carbon dioxide, nitrogen or the like can be used as the blowing agent.

Particularly, a saturated hydrocarbon, carbon dioxide and nitrogen are preferred as the blowing agent.

As the expansion nucleating agent, for example, a polytetrafluoroethylene resin is preferred. Such the polytetrafluoroethylene resin has an effect capable of producing a molded foam article having fine cells and excellent appearance. The reason is as follows. That is, when the amount of the polytetrafluoroethylene resin is small, a remarkable effect of refining cells is exerted. On the other hand, polytetrafluoroethylene resin hardly accelerates the crystallization of the crystalline aromatic polyester resin.

The polytetrafluoroethylene resin is a thermoplastic resin wherein all hydrogen atoms of polyethylene are substituted with fluorine.

Among these polytetrafluoroethylene resins, a commercially available polytetrafluoroethylene resin for lubricant is effective as the expansion nucleating agent in extrusion foaming of the crystalline aromatic polyester resin. The reason is that the commercially available polytetrafluoroethylene resin for lubricant has the following characteristics that are different from those of a polytetrafluoroethylene resin for molding.

One of the characteristics is a melt viscosity. That is, even when performing a so-called melt index test wherein a polytetrafluoroethylene resin heated to a temperature of 340° C is extruded through a nozzle having an inner diameter of 2.1 mm and a length of 8.0 mm under gauge pressure of 2.0 MPa, the polytetrafluoroethylene resin for molding does not flow out through the nozzle and, therefore, the melt flow index is 0. On the other hand, when the polytetrafluoroethylene resin for lubricant is extruded under the above conditions, the resin flows out through the nozzle and exhibits a flow of not less than 1.0 g. That is, those having characteristics to secure the melt flow index of not less than 1.0 are

most preferred.

The amount of the polytetrafluoroethylene resin added is preferably within a range of from about 0.005 to 0.1 parts by weight based on 100 parts by weight of the crystalline aromatic polyester resin. When the amount is within this range, not only does the polytetrafluoroethylene resin effectively function as the expansion nucleating agent for the crystalline aromatic polyester resin, but also it hardly exerts an influence on the crystallization of the crystalline aromatic polyester resin.

In case where the polytetrafluoroethylene resin is added to the crystalline aromatic polyester resin in the amount within the above range, not only is the effect of improving the melt tension of the molten crystalline aromatic polyester resin exerted on extrusion foaming in the production of the prepuff, thereby to improve the stability of the extrusion foaming, but also collapse due to cell membranes being too thin is prevented on cell refining, thereby making it possible to form fine and good cells. Therefore, this case is one of most preferred embodiments.

The polytetrafluoroethylene resin is more preferably added in the amount within a range of from 0.007 to 0.08 parts by weight, and particularly from 0. 009 to 0.06 parts by weight, based on 100 parts by weight of the crystalline aromatic polyester resin.

In the process of adding the polytetrafluoroethylene resin, those prepared only by dry blending with the crystalline aromatic polyester resin can be used as a material for extrusion foaming.

To further improve the dispersion properties, it is also preferred to use in the state of a masterbatch using the crystalline aromatic polyester resin.

The masterbatch can be produced by melt-mixing a resin, such as same crystalline aromatic polyester resin as a main component of the prepuff or crystalline aromatic polyester resin having the compatibility, with the polytetrafluoroethylene resin using an extruder, and forming into pellets using a pelletizer.

In the present invention, there can be added polyolefin resin such as polypropylene resin, a thermoplastic elastmor resin such as polyester elastmor resin, polycarbonate resin, ionomer resin or the like to the crystalline aromatic polyester resin as far as a large influence is not exerted on the crystallinity or crystallization rate.

The prepuff is produced by foamed extrudate (foam) of the crystalline aromatic polyester resin and cutting the resulting foam into particles.

As described above, the step of impregnating the crystalline aromatic polyester resin with the blowing agent is eliminated thereby to save the time, cost and labor and, at the same time, the crystallinity of the prepuff is further lowered, thereby making it possible to improve the fusion between the prepuffs on cavity-molding. That is, the prepuff is produced by mixing the crystalline aromatic polyester resin with a blowing agent in a molten state under high pressure, conducting extrusion foaming of the mixture to obtain a foamed extrudate, and cutting the foamed extrudate into particles.

The extruder is not specifically limited and is usually a single screw extruder or twin screw extruder used in this kind of extrusion foaming. The extruder may also be a tandem type extruder connected with these extruders, but is preferably an extruder having sufficient melting and mixing capability.

As a die of the extruder, for example, various dies can be used. Examples thereof include circular die, flat die, nozzle die, and multi-nozzle die equipped with a plurality of nozzles. Using these dies, foamed extrudate having various shapes such as sheet, plate, strand, etc. can be made.

To afford a predetermined shape to the foamed extrudate, the following process can be used.

For example, a cylindrical foam is extruded through a circular die and transferred on a cooled or temperature-controlled cylindrical mandrel. After cooling, its foamed extrudate is cut and spread to obtain a foam sheet.

The other process includes, for example a process of a foamed extrudate through a nozzle die or multi-nozzle die in the shape of a strand. This strand-like foam is preferably air-cooled or water-cooled, or cooled by using a temperature-controlled cooling apparatus.

In any process, undesired proceeding of the crystallization should be avoided by cooling as rapidly as possible after extruding the foam.

Prepuffs obtained by appropriately cutting the foam sheet thus produced are in the shape of square or chips. Those obtained by cutting the strand-like foam are generally cylindrical prepuffs.

The foam can be cooled and cut timely.

For example, the foam extruded through a die cut into particles having a predetermined shape and size by using a pelletizer after water-cooling at the arbitrary time on foaming or after the completion of the foaming.

The foam extruded through a die, immediately before or after the completion of the foaming, can also be cooled immediately after cutting.

The foam extruded in the shape of a sheet can also be cut by using a grinder or shredder after winding it in the shape of a roll by using a winder.

The size of the prepuff thus produced is preferably from about 0.5 to 5 mm in an average particle diameter.

As described above, the prepuffs may be in the shape of a general cylinder, square or chip. Among them, a generally cylindrical shape is particularly preferred. This reason is as follows. That is, in case of molding, the mold

cavity formed by closing the mold for molding equipped with male and female mold members described hereinafter can be filled with the prepuffs more evenly. The molded foam article produced by an even filling with the prepuffs can exhibit excellent mechanical strength.

It has already been described that the generally cylindrical prepuffs are produced by exclusively cutting the foam strand, which is obtained by extrusion foaming, into particles having an arbitrary size. It has been found as a result of the test that the melt tension of the crystalline aromatic polyester resin is controlled to the value within a range of from about 0.7 to 3 g, most preferably, in case where the strand-like foam is produced by extrusion foaming. Conventionally, it is thought that it is necessary that the melt tension must be increased to 18.21 g so as to form the crystalline aromatic polyester resin into a sheet or board by extrusion foaming ("DEVELOPMENT OF POLYETHYLENE TEREPHTHALATE FOAM", ANTEC' 93, collection of summary II, page 1257). Therefore, this discovery is also one of novel arts unexpectedly found out by the present inventors.

The melt tension of the crystalline aromatic polyester resin is preferably from about 0.9 to 2.5 g, and more preferably from about 1.0 to 2.0 g.

To control the melt tension of the crystalline aromatic polyester resin to the value within the above range, a process of adding a melt tension modifier can be used.

As the melt tension modifier, for example, epoxy compound such as glycidyl phthalate, acid anhydride such as pyromellitic dianhydride, and metal compound of the group Ia and IIa such as sodium carbonate can be used alone or in combination.

The amount of the melt tension modifier added varies depending on the kind of the modifier used, but is generally from about 0.05 to 1.0 parts by weight, preferably from 0.06 to 0.5 parts by weight, and particularly preferably from about 0.08 to 0.3 parts by weight, based on 100 parts by weight of the crystalline aromatic polyester resin. The melt tension of the crystalline aromatic polyester resin can be controlled within the above range by adding the melt tension modifier in the amount within this range.

The mixture, which is obtained by previously melting and mixing the crystalline aromatic polyester resin and melt tension modifier in a predetermined ratio thereby to control the melt tension within the above predetermined range, may be charged in the extruder as a material for production. Since the melt tension can be controlled slightly with confirming the production state of the prepuff, both materials may also be charged separately in the extruder without melting and mixing previously.

The average cell diameter of the generally cylindrical prepuffs are preferably controlled within a range of from about 0.05 to 0.8 mm.

When the average cell diameter is smaller than the above range, the cell wall becomes too thin, thereby to exert a harmful influence on the foamability.

On the other hand, when the average cell diameter exceeds the above range, the cell diameter becomes too large, thereby to exert a harmful influence on the appearance.

The average cell diameter of the prepuffs are preferably from about 0.1 to 0.7 mm, and more preferably from about 0.15 to 0.6 mm, within the above range.

The crystallinity of the prepuffs is controlled to 1 to 6% so as to obtain a molded foam article having excellent fusion between the prepuffs and excellent mechanical strength, and a laminated molded foam article having excellent fusion between the molded foam article and a film or sheet, a good appearance and good mechanical strength in case of cavity-molding.

The crystallinity of the prepuffs is from 1 to 6%.

The crystallinity (%) was determined from a quantity of heat of cold crystallization and a quantity of heat of fusion, that were measured in accordance with the measuring procedure defined in the Japanese Industrial Standard No. JIS K7121$_{-1987}$ using a differential scanning calorimetry (DSC) in the same manner as in measurement of the crystallization peak temperature described previously, by the following equation:

$$\text{Crystallinity (\%)} = \frac{\text{(Quantity of heat of fusion per mol)} - \text{(Quantity of heat of cold crystallization per mol)}}{\text{(Quantity of heat of fusion per mol of perfect crystallized PET resin)}} \times 100$$

The quantity of heat of fusion per mol of the perfect crystallized PET resin in the equation was set to 26.9 kJ due to the description of Polymer Data Handbook (issued by Baifukan).

Specifically, a predetermined amount of the prepuff as a sample measured was set in a measuring container of the DSC and the quantity of heat of cold crystallization and quantity of heat of fusion were measured with heating at a heating rate of 10° C/min. The crystallinity of the prepuff was determined from the measurement results on the basis of the above equation.

In the present invention, the bulk density of the prepuffs are controlled within a range of from 0.01 to 1.0 g/$cm^3$ so as to obtain a molded foam article which is lightweight and is superior in mechanical strength, heat resistance, insulating properties, cushioning properties and chemical resistance.

When the bulk density of the prepuffs are lower than the above range, the apparent density of the molded foam article produced becomes too low and, therefore, the mechanical strength, heat resistance and cushioning properties become insufficient. On the other hand, when the bulk density exceeds the above range, a lightweight molded foam article can not be obtained and the heat resistance and cushioning properties become insufficient.

The bulk density of the prepuffs are preferably from about 0.03 to 0.8 g/$cm^3$, and more preferably from about 0.04 to 0.6 g/$cm^3$, within the above range.

To produce a further lightweight molded foam article, the bulk density of the prepuffs are particularly preferably not more than 0.1 g/$cm^3$, within the range of from 0.01 to 1.0 g/$cm^3$.

In case where prepuffs having a comparatively low bulk density of not more than 0.1 g/$cm^3$ are produced, the prepuffs produced by the previously described process should be impregnated with a gas under pressure and the impregnated prepuffs should be subjected to expanding by heating, thereby to control the bulk density to a low value. The expanding (pre-expanding) step may be repeated twice or more with the proviso that the crystallinity does not exceed 8%.

In the pre-expanding step, for example, various gases can be used in the form of a gas at normal temperature under normal pressure, such as nitrogen, carbon dioxide gas, helium, neon, argon, oxygen, air and a mixture thereof.

In the vapor phase impregnation for impregnating the prepuffs with the above gas, the impregnation pressure is from about 0.1 to 10 MPa (gauge pressure), preferably from about 0.2 to 7 MPa (gauge pressure), and particularly from about 0.3 to 5 MPa (gauge pressure). The impregnation time varies depending on the kind of the gas, but is from about 15 minutes to 48 hours, preferably from about 30 minutes to 24 hours, and particularly from about 1 to 12 hours. The temperature is preferably not more than 60° C so as to prevent the crystallinity of the prepuffs from increasing.

In a case where the prepuffs impregnated with the gas are pre-expanded, for example, hot air, hot water, steam, hot oil, hot gas, etc. can be used as a heating medium. In view of good handling of the prepuffs after pre-expanding and efficiency of expanding, hot air, hot water or steam is preferred.

The pre-expanding step is suited for production of the prepuffs having a bulk density of not more than 0.1 g/$cm^3$ (referred to as a "secondary prepuff"). Accordingly, even in case where the bulk density of the prepuffs before pre-expanding (referred to as a "primary prepuff") is higher than 0.1 g/$cm^3$, the bulk density can be controlled lower by carrying out the pre-expanding step.

Finally, an open cell ratio of the prepuffs used in the molding (primary prepuff, secondary prepuff) is preferably from 5 to 35%.

When the open cell ratio of the prepuffs exceeds 35%, a harmful influence is exerted on molding, sometimes, and there is a fear that good molded foam article can not be produced.

On the other hand, when the open cell ratio is not more than 5%, there is a fear that shrinkage of a molded foam article on removal from the mold increases.

To the contrary, when using the prepuffs having an open cell ratio within a range of from 5 to 35%, shrinkage on removal from the mold can be inhibited and the appearance does not become poor due to generation of wrinkles on the surface of the molded foam article. Accordingly, it is particularly suited for use as industrial parts to which high dimensional accuracy is required.

The open cell ratio is particularly preferably not more than 30% within the above range.

The average cell diameter of the prepuffs can be controlled by a process of adding the expansion nucleating agent such as polytetrafluoroethylene to the crystalline aromatic polyester resin as described above and a process of controlling a shear rate on extrusion through a die. According to the latter process, the open cell ratio of the prepuffs can also be controlled.

In case where the average cell diameter of the prepuffs are adjusted by the latter process, the cell becomes smaller as the shear rate becomes larger. When the shear rate is too large, the molten resin is melt-fractured, which is not preferred.

Specifically, the shear rate is preferably controlled from about 3000 to 30000 $sec^{-1}$, more preferably from about 4000 to 25000 $sec^{-1}$, and particularly preferably from about 5000 to 20000 $sec^{-1}$, so as to control a melt tension to about 0.7 to 3 g as described above. Thus, the average cell diameter and open cell ratio of the generally cylindrical prepuffs are controlled within preferred range.

Molded foam article

To produce the molded foam article of the present invention by using the above prepuffs, there is preferably used a process of filling a mold cavity corresponding to the shape of the molded foam article, which is formed by closing not gas-tight male and female mold members of a mold for cavity-molding, with the prepuffs, and introducing steam as a heating medium thereby conducting molding.

As the heating medium, for example, hot air can be used, in addition to steam, but steam is most effective to efficiently conduct molding.

In case where molding is conducted by using steam, the molding may be conducted using a general purpose molding machine. After filling the cavity with the prepuffs, air between the prepuffs are discharged outside (evacuation operation from the other mold may also be conducted in that case) by introducing steam from one of the molds into the cavity under low pressure (e.g. about 0.01 to 0.05 MPa (gauge pressure)). Then, the molded foam article is produced by increasing the pressure of steam to be introduced from the both molds (e.g. about 0.02 to 0.10 MPa (gauge pressure)), that is, molding of the prepuffs.

An expansion force of the prepuffs on molding is enhanced by maintaining the prepuffs in a closed tank containing an inorganic gas such as carbon dioxide gas, nitrogen, helium, etc. under pressure in a gas atmosphere, thereby making it possible to obtain a good molded foam article, which is a preferred embodiment.

The fusion ratio between the prepuffs of the molded foam article thus obtained is preferably not less than 40%, more preferably not less than 50%, and particularly preferably not less than 60%. The molded foam article having its fusion ratio of not less than 60% is particularly superior in appearance and mechanical strength.

The molded foam article, of which crystallinity is preferably controlled to 15% or more, more preferably from 20 to 40%, has excellent heat resistance.

The molded foam article of this invention has excellent dimensional stability.

The molded foam article of the present invention can be reused after using in various purposes described above. By reusing the used molded foam article, it is made possible to contribute to effective reuse of resources and reduction in dust and to reduce the cost of the molded foam article.

Laminated molded foam article

The laminated molded foam article of the present invention, which is produced by laminating the molded foam article with a film or sheet of the aromatic polyester film due to heat fusion without using an adhesive, is one of the most preferred embodiments.

Describing in detail, the crystalline aromatic polyester resin prepuffs having a crystallization peak temperature of 130 to 180° C exhibit not only good fusion between the prepuffs upon cavity-molding, but also excellent adhesion properties to the film or sheet of the aromatic polyester resin upon molding.

The laminated molding process comprises closing male and female mold members in the state where a mold cavity corresponding to the shape of the molded foam article, which is formed by closing male and female mold members of a mold for molding, is previously fit with a film or sheet of an aromatic polyester resin, filling the mold cavity with crystalline aromatic polyester resin prepuffs of the present invention, and introducing a heating medium such as steam thereby to conduct molding of the molded foam article and to integrally laminate the molding material with the film or sheet due to heat fusing (laminating molded process).

Alternatively, there can be used a process of previously making a molded foam article from prepuffs by molding, and integrally laminating the molded foam article with the film or sheet by fusing with heating using a hot press or hot roll at the temperature of not less than 130° C, preferably not less than 140° C, but the above laminating molded process is preferred because the above process using the hot press or hot roll is not suitable for a molded foam article with heat-resistance.

The production conditions using steam as the heating medium of the laminating molded process will be described.

In case where the molding is conducted by using steam, the mold cavity is filled with the prepuffs in a state where the mold cavity is already fitted with a film or sheet of an aromatic polyester resin. Then, air between the prepuffs are discharged outside by introducing steam into the cavity from one of the molds under low pressure (e.g. about 0.01 to 0.05 MPa (gauge pressure)). Then, the pressure of steam to be introduced is increased (e.g. about 0.04 to 0.1 MPa (gauge pressure)) and the steam is introduced into the cavity from the both molds thereby to mold the prepuffs, and to fuse the prepuffs each other and to fuse the prepuffs with the film or sheet. When the resulting laminated molded foam article is maintained at the temperature of not less than 90° C, preferably from 90° C to the temperature lower than the above molding temperature, for about 60 to 1200 seconds, the crystallization of the molded foam article and film or sheet is accelerated, thereby making it possible to improve the heat resistance of the laminated molded foam article. When the laminated molded foam article is maintained at the temperature where the crystallinity of the molded

foam article and film or sheet exceeds 20%, excellent heat resistance can be imparted to the laminated molded foam article.

A laminated molded foam article is obtained after maintaining at the above temperature, followed by finally cooling and further removal of the mold.

As the crystalline aromatic polyester resin prepuff used in that case, for example, the prepuff having a crystallization peak temperature of 130 to 180° C, preferably from 132 to 170° C, more preferably from 135 to 160° C, and a crystallinity of 1 to 8% exhibits good moldability and adhesion properties.

An amorphous sheet or film and/or a crystalline sheet or film to be laminated in this invention should have a crystallinity of not more than 15%. Because a laminated molded foam article has practically excellent peel strength, specifically peel strength of not less than 5 N/25 mm, can be obtained.

In view of characteristics such as mechanical strength, heat resistance, chemical resistance, printability, etc. a film or sheet containing, as a principal component, PET synthesized by the polycondensation reaction between terephthalic acid as dicarboxylic acid and ethylene glycol as diol is preferably used as the film or sheet of the aromatic polyester resin.

As the film or sheet, for example, a resin used in the prepuff of the present invention is also preferred.

The film or sheet preferably has a crystallinity of not more than 15%. The reason is as described above. The film or sheet formed from a so-called amorphous aromatic polyester resin having a crystallinity of 0% can also be used. To obtain a heat-resistant laminated molded foam article, a crystalline aromatic polyester film or sheet is preferred.

The film or sheet preferably has a thickness from about 50 μm to 1 mm. A film or sheet produced by extrusion forming can be used. As the sheet, a foamed sheet can also be used. The foamed sheet preferably has a thickness of about 0.5 to 3 mm and a crystallinity of not more than 15%.

As described above in detail, according to the present invention, there is exerted such specific operation/working-effect that a novel crystalline aromatic polyester resin prepuff, which is superior in fusion between the prepuffs on molding, a molded foam article formed of the prepuff, which is superior in fusion between the prepuffs and mechanical strength and is also superior in appearance, and a good laminated molding material wherein the molded foam article and a film or sheet are laminated by firmly adhering each other are obtained.

## Examples

Advantages of the present invention will be described in detail by the following Examples and Comparative Examples.

Any of the following measurements was conducted under an measuring environment of a temperature of 23° C±2° C and a humidity of 50±5%RH in accordance with the Japanese Industrial Standard No. JIS $K7100_{-1981}$ "Standard Atmospheres for Conditioning and Testing of Plastics".

The crystallization peak temperature of the prepuff, and the crystallinity of the prepuff, film, sheet and molded foam article were determined from the results measured in accordance with the measuring procedure defined in the Japanese Industrial Standard No. JIS $K7121_{-1987}$, as described above.

The content of the IPA unit and/or CHDM unit in the crystalline aromatic polyester resin, and the melt tension of the resin were measured by the following procedures, respectively.

### Measurement of content of IPA unit

After weighing about 100 mg of a sample in a pressure-resistant teflon cup, 10 ml of dimethyl sulfoxide for absorption spectrochemical analysis manufactured by Wako Pure Chemical Industries, Ltd. and 6 ml of a 5 N sodium hydroxide-methanol solution were added. Then, the pressure-resistant teflon cup was put in a pressure-resistant heating cup made of SUS and, after securely sealing the cup, heating was conducted at 100° C for 15 hours.

Then the pressure-resistant heating cup after heating was cooled to room temperature, the pressure-resistant teflon cup that completely cooled was removed and the contents in the cup were transferred to a 200 ml beaker. Distilled water was added in the amount of up to about 150 ml.

After confirming that the contents had been completely dissolved, the solution was neutralized with hydrochloric acid within a range of from pH 6.5 to 7.5. After the completion of the neutralization, the solution was diluted to 200 ml with distilled water and then the diluted solution was further diluted ten times with distilled water and the resulting solution was taken as a sample solution.

Using this sample solution and an isophthalic acid standard solution, the measurement was conducted under the following conditions by a high-performance liquid chromatograph (HPLC)apparatus. As the isophthalic acid standard solution, those prepared by dissolving an isophthalic acid reagent manufactured by Tokyo Kasei Kogyo Co., Ltd. with distilled water were used.

| | |
|---|---|
| Instrument: | Waters HPLC LC-module 1 |
| Column: | Inertsil ODS-2 manufactured by GL Co., 5 μm (4.6 × 250) |
| Column temperature: | 23±2° C |
| Pump temperature: | 23±2° C |
| Eluent: | 0.1% phosphoric acid/acetonitrile = 80/20 |
| Flow rate: | 0.5 ml/min. |
| Run time: | 50 minutes |
| Amount to be poured: | 50 μl |
| Detection: | UV-210 nm |

Then, a calibration curve was made by a plot of the peak area of isophthalic acid obtained from the standard solution as X-axis versus the concentration as Y-axis. Using the resulting calibration curve, the concentration of isophthalic acid (μg/ml) in the sample solution was calculated.

The content of the IPA unit (% by weight) in the crystalline aromatic polyester resin was calculated from the above concentration by using the following equation:

$$\text{Content of IPA unit (\% by weight)} = \frac{\{\text{Concentration of isophthalic acid } (\mu g/ml)\}}{\{\text{Weight of sample (mg)}\}} \times 159.05$$

Measurement of content of CHDM unit

After weighing about 100 mg of a sample in a pressure-resistant teflon cup, 10 ml of dimethyl sulfoxide for absorption spectrochemical analysis manufactured by Wako Pure Chemical Industries, Ltd. and 6 ml of a 5 N sodium hydroxide-methanol solution were added. Then, the pressure-resistant teflon cup was put in a pressure-resistant heating cup made of SUS and, after securely sealing the cup, heating was conducted at 100° C for 15 hours.

Then the pressure-resistant heating cup after heating was cooled to room temperature, the pressure-resistant teflon cup that completely cooled was removed and the contents in the cup were transferred to a 100 ml beaker. Guaranteed reagent methanol was added in the amount of up to about 70 ml.

After confirming that the contents had been completely dissolved, the solution was neutralized with hydrochloric acid within a range of from pH 6.5 to 7.5. After the completion of the neutralization, the solution was diluted to 100ml with guaranteed reagent acetone and then the diluted solution was further diluted ten times with guaranteed reagent acetone and the resulting solution was taken as a sample solution.

This sample solution and a 1,4-cyclohexanedimethanol standard solution were weighed separately in a 10 ml centrifuge tube. After the solvent was evaporated to dryness with centrifuging, 0.2 ml of a TMS agent manufactured by Tokyo Kasei Kogyo Co, Ltd. was added and heating was conducted at 60° C for 1 hour.

Using a gas chromatograph (GC) apparatus, the liquid after heating was measured under the following conditions.

| | |
|---|---|
| Instrument: | Perkin Elmer GC AutoSystem |
| Column: | DB-5 (0.25 mmϕ × 30 m × 0.25 μm) |
| Oven temperature: | 100° C (2 minutes) |
| | R1 -200° C - R2 - 320° C (5 minutes) |
| Heating rate: | R1 = 10° C/min., R2 = 40° C/min. |
| Run time: | 20 minutes |
| Injection temperature: | 300° C |
| Detector: | FID (300° C) |
| Gas pressure: | 18 psi |

Then, a calibration curve was made by a plot of the peak area of 1,4-cyclohexanedimethanol obtained from the standard solution as X-axis versus the concentration as Y-axis. Using the resulting calibration curve, the concentration of 1,4-cyclohexanedimethanol (μg/ml) in the sample solution was calculated.

The content of the CHDM unit (% by weight) in the crystalline aromatic polyester resin was calculated from the above concentration by using the following equation:

Content of CHDM unit (% by weight) =

$$\frac{\{\text{Concentration of 1,4-cyclohexanedimethanol } (\mu g/ml)\}}{\{\text{Weight of sample (mg)}\}} \times 98.62$$

Measurement of melt tension

Measuring samples: While maintaining the conditions for making the prepuff in the extruder, the measuring sample was produced having unfoamed pellets under the conditions wherein pouring of the blowing agent is terminated. The unfoamed pellets were measured after removing water by drying under reduced pressure in a vacuum drier at 110° C for 24 hours.

| | |
|---|---|
| Measuring apparatus: | Capillograph PMD-C (manufactured by Toyo Seiki Seisaku-sho, Ltd.) |
| Temperature: | 270° C |
| Preheating time: | five minutes |
| Shape of capillary: | 1.0 mm in diameter, 20 mm in length and 90 degrees in entrance angle |
| Extrusion rate: | 300 mm/min. (shear rate: 364.8 $sec^{-1}$) |
| Haul-off rate: | 100 mm/min. |

The bulk density of the prepuff, the apparent density of the molded foam article and the apparent density of the foamed sheet were measured by the following procedures.

Measurement of bulk density and apparent density

In accordance with the procedure defined in the Japanese Industrial Standard No. JIS $K6767_{-1976}$ "Testing Method for Polyethylene Foams", the bulk density of the prepuff ($g/cm^3$), the apparent density of the molded foam article ($g/cm^3$) and the density of the foamed sheet ($g/cm^3$) were determined by using the following equations respectively.

$$\text{Bulk density of prepuff } (g/cm^3) = \frac{\{\text{Weight of prepuff (g)}\}}{\{\text{Bulk volume of prepuff (cm3 )}\}}$$

$$\text{Apparent density of foamed sheet } (g/cm^3) = \frac{\{\text{Weight of foamed sheet (g)}\}}{\{\text{Volume of foamed sheet } (cm^3)\}}$$

$$\text{Apparent density of molded foam article } (g/cm^3) = \frac{\{\text{Weight of molded foam article (g)}\}}{\{\text{Volume of molded foam article (cm3 )}\}}$$

The open cell ratio and average cell diameter of the prepuff were measured by the following procedures.

Measurement of open cell ratio

The open cell ratio (%) of the prepuff was determined by conducting the following tests (1) to (3).

(1) Measurement of weight and volume of prepuff

The weight of prepuffs which can be charged in a sample cup of an air comparison type specific gravimeter (Model 1000, manufactured by Tokyo Science Co.) in the volume of about 80% was previously measured {weight A of prepuffs (g)}.

The prepuffs were charged in the cup and the cup was set to the specific gravimeter, and then the volume was measured by the 1 - 1/2 - 1 atmosphere method {volume B of prepuffs ($g/cm^3$)}.

(2) Measurement of apparent volume of prepuff

In the state where a measuring dish of an electronical balance (HB3000, manufactured by YAMATO SCALE Co., Ltd.) was removed and a container made of a wire gauze was suspended by a fitting, the above container was dipped in water and the weight of the container was measured in water {weight C of container in water (g)}.
Then, the total amount of the prepuffs measured in; the above item (1) was charged in the same container and the total weight of the container and prepuffs was measured in the state of being dipped in water in the same manner as described above {total weight D in water (g)}.
Then, the apparent volume E of the prepuffs ($g/cm^3$) was determined by the following equation:

$$E = A + (C - D)$$

With the proviso that 1 g of water was reduced to the volume of 1 $cm^3$.

(3) Open cell ratio

The open cell ratio (%) was determined from the results of the above items (1) and (2) by the following equation:

$$\text{Open cell ratio (\%)} = (E - B) \times 100/E$$

Measurement of average cell diameter

The average cell diameter was determined by an arithmetic mean of the respective average cell diameter of the resin in the flow direction (MD), width direction (TD) and thickness direction (VD) determined in accordance with ASTM D2842-69.
The bending strength, the deflection amount and its fusion ratio of the molded foam article were measured by the following procedures and, at the same time, the dimensional stability, heat resistance and appearance were evaluated by the following procedures.

Measurement of bending strength and deflection amount

Using test pieces in size of 50 mm × 100 mm × 13 mm made by cutting the molded foam article, the bending test was conducted under the following conditions and the maximum bending strength (MPa) and the deflection amount (mm) were determined.

| | |
|---|---|
| Apparatus: | Tensilon universal testing machine |
| Bending rate: | 50 mm/min. |
| Tip jig: | Pressure wedge 3.2R |
| Support base: | 3.2R |
| Span distance: | 50 mm |

Measurement of fusion ratio

After the molded foam article was fractured by folding in the thickness direction, the number of all prepuffs existing on the fractured surface and that of prepuffs wherein material fracture occurred were counted. Then, its fusion ratio (%) as an indication of the fusion between the prepuffs was determined by the following equation:

$$\text{Fusion ratio (\%)} = \frac{\text{(Number of prepuffs wherein material fracture occurred)}}{\text{(Number of all prepuffs existing on fractures surface)}} \times 100$$

Evaluation of dimensional stability of molded foam article

The shrinkage ratio of the molded foam article (%) on removal from the molds was determined from the distance $L_1$ corresponding to the maximum length of the molded foam article of the molding cavity and the maximum

length $L_2$ of the molded foam article on removal from the molds by the following equation. The sample where the shrinkage ratio was not more than 2% was rated "○" ( good dimensional stability), while the sample where the shrinkage ratio was exceeded 2% was rated "×" (poor dimensional stability).

$$\text{Shrinkage ratio of molded foam article (\%)} =$$

$$(L_1 - L_2) \times 100/L_1$$

Evaluation of heat resistance

The heat resistance of the molded foam article and laminated molded foam article was evaluated in accordance with the Japanese Industrial Standard No. JIS $K6767_{-1976}$. That is, the molded foam article or laminated molded foam article was put in a high-temperature bath at 150° C and heated for 22 hours. The dimensional change ratio (%) was determined from an absolute value of a difference between the size $T_3$ before heating and the size $T_4$ after heating by the following equation. Then, the sample where the dimensional change ratio was not more than 2% was rated "○" (good heat resistance), while the sample where the dimensional change ratio was exceeded 2% was rated "×" (poor heat resistance).

Dimensional change ratio (%) = $|T_3 - T_4| \times 100/T_3$ Evaluation of appearance

The appearance of the molded foam article was visually observed, and then the sample where melting or sink was recognized was rated "×" (poor appearance), the sample where melting or sink was not recognized was rated "○" (good appearance) , and the sample where melting or sink was not recognized and the surface is very smooth; was rated "◎ (particularly good appearance).

The peel strength of the film or sheet from the molded foam article in the laminated molded foam article, the surface smoothness of the laminated molded foam article, and the falling ball impact value showing the whole impact strength were measured and evaluated by the following procedures, respectively.

Measurement of peel strength

The laminated molded foam article was cut to make a sample (having the same thickness as that of the laminated molded foam article: 20 mm) wherein the surface on which the film or sheet is laminated has a size of 160 mm in length and 25 mm in width.

After previously peeling the film or sheet from this sample in the length of 100 mm before measurement, the peel strength (N/25 mm) was measured by stretching each tip portion of the molded foam article and film or sheet, which are peeled off each other, of the sample in the 180° direction, using a Tensilon universal testing machine (UCT-10T, manufactured by Orientic Co.). The test conditions are as follows.

| | |
|---|---|
| Stretching rate: | 200 mm/min. |
| Stretching distance: | 50 mm |

Evaluation of surface smoothness

By rolling a rubber roll whose surface is coated uniformly with black printing ink on the surface on which the film or sheet is laminated of the laminated molded foam article, black printing ink of the roll surface was transferred and printed on the surface on which the film or sheet is laminated.

The printing results were visually observed, and then the sample where white spots were not recognized was rated "○" (good surface smoothness), while the sample where some white sports caused by unevenness of the surface were recognized was rated "×" (poor surface' smoothness).

Measurement of falling ball impact value

The laminated molded foam article was cut to make a sample (having the same thickness as that of the laminated molded foam article: 20 mm) wherein the surface on which the film or sheet is laminated has a size of 215 mm in length and 40 mm in width.

After placing this sample on a pair of supporting members disposed at a span of 155 mm in the state where the surface on which the film or sheet faces upward, a steel ball having a weight of 321 g was fallen on the sample at the intermediate position of both supporting members from a predetermined height. Then, it was observed whether the sample was fractured or not.

This test was repeatedly conducted, except for changing the height from which the steel ball is fallen, and the minimum value of the height where the sample was fractured was determined as a falling ball impact value (cm), thereby evaluating the strength of the laminated molded foam article.

The crystalline aromatic polyester resins used in the following Examples and Comparative Examples are listed in Table 1.

Table 1

| No. of resin | Details | Content (% by weight) | | IV value |
|---|---|---|---|---|
| | | IPA unit | CHDM unit | |
| 1 | Recycled PET resin obtained by recovering PET bottle | 0 | 0 | 0.67 |
| 2 | Aromatic polyester resin (MA-1344, manufactured by Unitika Ltd.) synthesized by polycondensation reaction of ethylene glycol, isophthalic acid and terephthalic acid | 5.8 | 0 | 0.72 |
| 3 | Aromatic polyester resin synthesized by polycondensation reaction of ethylene glycol, cyclohexanedimethanol and terephthalic acid | 0 | 17.2 | 0.75 |
| 4 | Aromatic polyester resin Synthesized by polycondensation reaction of ethylene glycol, isophthalic acid and terephthalic acid | 1.4 | 0 | 0.80 |
| 5 | Aromatic polyester resin synthesized by polycondensation reaction of ethylene glycol, cyclohexanedimethanol and terephthalic acid | 0 | 0.9 | 0.80 |
| 6 | Aromatic polyester resin synthesized by polycondensation reaction of ethylene glycol and terephthalic acid | 0 | 0 | 0.88 |
| 7 | Aromatic polyester resin synthesized by polycondensation reaction of ethylene glycol, isophthalic acid and terephthalic acid | 1.4 | 0 | 0.82 |

Example 1

75 Parts by weight of a resin of No. 1, and 25 parts by weight of a resin of No. 2 both described in Table 1 as a crystalline aromatic polyester resin, 0.30 parts by weight of pyromellitic dianhydride as a modifier, and 0.03 parts by weight of sodium carbonate as an auxiliary modifier were charged in an extruder (extruder bore: 65 mm, L/D ratio: 35) and mixed and melted at a screw revolution 50 rpm and a barrel temperature in the range of from 270° C to 290° C. 1.0 parts of butane (n-butane / isobutane = 7/3) as a blowing agent per 100 parts of the mixture was introduced under pressure into the extruder barrel.

Then, the mixture in the molten state was extruded and foamed through a circular die (die gap: 0.4mm, die bore: 60mm) connected to the tip portion of the extruder barrel, thereby to form the molten mixture into a tubular foam. The inner surface of the tubular foam was forced to travel in contact with a cylindrical mandrel (with cooling water of 20° C circulating inside thereof) while its outer surface was cooled by air supplied through an air ring, and then the tubular foam was cut open to obtain a foam sheet (apparent density: 0.2 g/cm$^3$, thickness: 1.0 mm). The resulting foam sheet (foamed extrudate) was cut into cubic particles of about 5 mm × 3 mm × 1mm to produce prepuffs.

The bulk density of the prepuff was 0.12 g/cm$^3$, the crystallinity was 3.6%, and the crystallization peak temperature was 135.2° C. The content of the IPA unit of the crystalline aromatic polyester resin constituting the prepuff was 1.4% by weight, and the content of the CHDM unit was 0% by weight.

The prepuffs were charged in a sealed container and then maintained for 4 hours for impregnation after injecting a carbon dioxide gas under gauge pressure of 0.98 MPa.

A mold cavity having an inner size of 300 mm × 400 mm × 20 mm, which was formed by closing male and female mold members, was immediately filled with the prepuffs taken out from the sealed container. The prepuffs were molded(expanded and fused) by introducing steam into the mold cavity through the female mold member under gauge pressure of 0.07 MPa for 45 seconds and then introducing steam into the cavity through the both mold members under gauge pressure of 0.10 MPa for 45 seconds. After maintaining the state for 120 seconds, when introduction of steam was terminated and water-cooling was performed, a molded foam article was removed.

The apparent density of the resulting molded foam article was 0.12 g/cm$^3$. Its fusion ratio was 62%, and acceptable fusion was exhibited. The bending strength was 1.15 MPa and the deflection amount was 2.73 mm, that is, the molded foam article had high mechanical strength.

Example 2

In the same manner as in Example 1, except that 100 parts by weight of the resin of No. 2 described in Table 1 was used as the crystalline aromatic polyester resin, prepuffs were produced to obtain a molded foam article.

The bulk density of the prepuff was 0.12 g/cm$^3$, the crystallinity was 2.6%, and the crystallization peak temperature was 154.3° C. The content of the IPA unit of the crystalline aromatic polyester resin constituting the prepuff was 5.8% by weight, and the content of the CHDM unit was 0% by weight.

The resulting molded foam article was a good one free from pores between the prepuffs and the apparent density was 0.12 g/cm$^3$. Its fusion ratio was 92%, and acceptable fusion was exhibited. The bending strength was 1.19 MPa and the deflection amount was 10.6 mm, that is, the molded foam article had high mechanical strength.

Example 3

In the same manner as in Example 1, except that 85 parts by weight of the resin of No. 1 and 15 parts by weight of the resin of No. 3 both described in Table 1 were used as the crystalline aromatic polyester resin, prepuffs were produced to obtain a molded foam article.

The bulk density of the prepuff was 0.12 g/cm$^3$, the crystallinity was 4.6%, and the crystallization peak temperature was 136.7° C. The content of the IPA unit of the crystalline aromatic polyester resin constituting the prepuff was 0% by weight, and the content of the CHDM unit was 2.6% by weight.

The apparent density of the resulting molded foam article was 0.12 g/cm$^3$. Its fusion ratio was 68%, and acceptable fusion was exhibited. The bending strength was 1.02 MPa and the deflection amount was 3.42 mm, that is, the molded foam article had high mechanical strength.

In the bending test of the molded foam articles obtained in Examples 1 to 3, the fractured surface of the molded foam article was examined. As a result, it was observed that prepuffs were not separated from the prepuffs interface and prepuffs themselves were fractured because of strong fusing force.

Example 4

The foam sheet (apparent density: 0.2 g/cm$^3$, thickness: 1.0 mm) made in the same manner as in Example

2 before cutting was molded into a food tray by using a heating plate molding machine. The molding conditions were as follows. That is, the temperature of the heating plate was 120° C and the heating time was 4 seconds. Furthermore, the temperature of the mold was 25° C and the molding time was 6 seconds. The tray had a width of 120 mm, a length of 150 mm and a depth of 25 mm.

Assuming that this tray is a used one, the tray was cut into chip-like pieces in size of about 5 mm × 3 mm to obtain prepuffs. Using the resulting prepuffs, a molded foam article was obtained in the same manner as in Example 2.

The bulk density of the prepuff was 0.08 g/cm$^3$, the crystallinity was 2.9%, and the crystallization peak temperature was 154.5° C. The content of the IPA unit of the crystalline aromatic polyester resin constituting the prepuff was 5.8% by weight, and the content of the CHDM unit was 0% by weight.

The resulting molded foam article was a good one free from pores between the prepuffs, and the apparent density was 0.08 g/cm$^3$. Its fusion ratio was 90%, and acceptable fusion was exhibited. The bending strength was 1.00 MPa and the deflection amount was 8.6 mm, that is, the molded foam article had high mechanical strength.

Comparative Example 1

In the same manner as in Example 1, except that 100 parts by weight of the resin of No. 1 described in Table 1 was used as the crystalline aromatic polyester resin, prepuffs were produced to obtain a molded foam article.

The bulk density of the prepuff was 0.12 g/cm$^3$, the crystallinity was 9.6%, and the crystallization peak temperature was 126.8° C. The content of the IPA unit of the crystalline aromatic polyester resin constituting the prepuff was 0% by weight, and the content of the CHDM unit was 0% by weight.

The apparent density of the molded foam article was 0.12 g/cm$^3$, but its fusion ratio was 33%, and acceptable fusion was not obtained. The bending strength was 0.61 MPa and the deflection amount was 1.37 mm, that is, the molded foam article had insufficient mechanical strength.

The above results are summarized in Table 2 to 4.

Table 2

| | | Aromatic polyester resin | |
|---|---|---|---|
| | | Content of IPA (% by weight) | Content of CHDM (% by weight) |
| Examples | 1 | 1.4 | 0 |
| | 2 | 5.8 | 0 |
| | 3 | 0 | 2.6 |
| | 4 | 5.8 | 0 |
| Comp. Example 1 | | 0 | 0 |

Table 3

| | | Prepuff | | |
|---|---|---|---|---|
| | | Crystallinity (%) | Crystallization Peak temperature (° C) | Bulk Density (g/cm$^3$) |
| Examples | 1 | 3.6 | 135.2 | 0.12 |
| | 2 | 2.6 | 154.3 | 0.12 |
| | 3 | 4.6 | 136.7 | 0.12 |
| | 4 | 2.9 | 154.5 | 0.08 |
| Comp. Example 1 | | 9.6 | 126.8 | 0.12 |

Table 4

| | | Molded article | | | |
|---|---|---|---|---|---|
| | | Fusion Ratio (%) | Bending Strength (MPa) | Deflection Amount (mm) | Apparent Density (g/ $cm^3$) |
| Examples | 1 | 62 | 1.15 | 2.73 | 0.12 |
| | 2 | 92 | 1.19 | 10.6 | 0.12 |
| | 3 | 68 | 1.02 | 3.42 | 0.12 |
| | 4 | 90 | 1.00 | 8.60 | 0.08 |
| Comp. Example 1 | | 33 | 0.61 | 1.37 | 0.12 |

Example 5

100 Parts by weight of a resin of No. 4 described in Table 1 as an crystalline aromatic polyester resin, 0.3 parts by weight of pyromellitic dianhydride as a modifier, and 0.03 parts by weight of sodium carbonate as an auxiliary modifier were charged in an extruder (extruder bore: 65 mm, L/D ratio: 35) and mixed and melted at a screw revolution 50 rpm and a barrel temperature in the range of from 270° C to 290° C. 1.0 parts by weight of butane (n-butane/ isobutane = 7/3) as a blowing agent per 100 parts of the mixture was introduced under pressure into the extruder barrel.

Then, the mixture in the molten state was extruded and foamed through each of plural nozzles of a multi-nozzle die (15 nozzles having a diameter of 0.8 mm are disposed on a line) connected to the tip portion of the extruder barrel, and then cooled immediately in a cooling water bath.

The cooled strand-like foam (foamed extrudate) was sufficiently dehydrated and then cut into generally cylindrical pieces using a pelletizer to produce prepuffs.

The bulk density of the prepuff was 0.14 g/$cm^3$, the particle diameter was from 1.4 to 2.5 mm, the crystallinity was 4.8%, the crystallization peak temperature was 135.0° C, the average cell diameter was 0.40 mm, and the open cell ratio was 10.5%. The melt tension of the resin constituting the prepuff was 1.81 g.

The prepuffs were charged in a sealed container and then maintained for 4 hours for impregnation after injecting a carbon dioxide gas under gauge pressure of 0.49 MPa.

A mold cavity having an inner size of 300 mm × 400 mm × 20 mm, which was formed by closing male and female mold members, was immediately filled with the prepuffs taken out from the sealed container. The prepuffs were molded(expanded and fused) by introducing steam into the mold cavity through the female mold member under gauge pressure of 0.02 MPa for 10 seconds and then introducing steam into the mold cavity through the both mold members under gauge pressure of 0.06 MPa for 20 seconds. After maintaining the state for 120 seconds, where introduction of steam was terminated and water-cooling was performed, a molded foam article was removed.

It was confirmed that the apparent density of the resulting molded foam article was 0.14 g/$cm^3$ and the heat shrinkage ratio was 0.2% and that the dimensional stability was good. Its fusion ratio was 70%, and acceptable fusion was exhibited. The bending strength was 1.28 MPa and the deflection amount was 7.77 mm, that is, the molded foam article had high mechanical strength. The appearance was also good.

Example 6

In the same manner as in Example 5, except that 100 parts by weight of the resin of No. 2 described in Table 1 was used as the crystalline aromatic polyester resin and the amount of pyromellitic acid dianhydride as the modifier was changed to 0.25 parts by weight, prepuffs were produced to obtain a molded foam article.

The bulk density of the prepuff was 0.14 g/$cm^3$, the particle diameter was from 1.4 to 2.5 mm, the crystallinity was 3.0%, the crystallization peak temperature was 153.9° C, the average cell diameter was 0.47 mm, and the open cell ratio was 20.2%. The melt tension of the resin constituting the prepuff was 1.21 g.

It was confirmed that the apparent density of the resulting molded foam article was 0.14 g/$cm^3$ and the heat shrinkage ratio was 0.3% and that the dimensional stability was good. Its fusion ratio was 93%, and acceptable fusion was exhibited. The bending strength was 1.38 MPa and the deflection amount was 12.5 mm, that is, the molded foam article had high mechanical strength. The appearance was also good.

Example 7

In the same manner as in Example 5, except that 100 parts by weight of those obtained by mixing the resin of No. 2 described and the resin of No. 1 described in Table 1 in a weight ratio of 25:75, melting, mixing and ester-interexchanging the mixture (content of IPA unit: 1.4% by weight, content of CHDM unit: 0% by weight) were used as the crystalline aromatic polyester resin, prepuffs were produced to obtain a molded foam article.
The melting and mixing for ester interexchange were conducted in the extruder barrel of the above-described extruder for extrusion foaming before injection of butane as the blowing agent.
The bulk density of the prepuff was 0.14 g/cm$^3$, the particle diameter was from 1.4 to 2.5 mm, the crystallinity was 4.8%, the crystallization peak temperature was 135.5° C, the average cell diameter was 0.47 mm, and the open cell ratio was 19.8%. The melt tension of the resin constituting the prepuff was 1.22 g.
It was confirmed that the apparent density of the resulting molded foam article was 0.14 g/cm$^3$ and the heat shrinkage ratio was 0.3% and that the dimensional stability was good. Its fusion ratio was 65%, and acceptable fusion was exhibited. The bending strength was 1.24 MPa and the deflection amount was 6.54 mm, that is, the molded foam article had high mechanical strength. The appearance was also good.

Example 8

In the same manner as in Example 5, except that 100 parts by weight the resin of No. 5 described in Table 1 was used as the crystalline aromatic polyester resin, prepuffs were produced to obtain a molded foam article.
The bulk density of the prepuff was 0.14 g/cm$^3$, the particle diameter was from 1.4 to 2.5 mm, the crystallinity was 2.5%, the crystallization peak temperature was 136.7° C, the average cell diameter was 0.42 mm, and the open cell ratio was 13.6%. The melt tension of the resin constituting the prepuff was 1.53 g.
It was confirmed that the apparent density of the resulting molded foam article was 0.14 g/cm$^3$ and the heat shrinkage ratio was 0.2% and that the dimensional stability was good. Its fusion ratio was 64%, and acceptable fusion was exhibited. The bending strength was 1.22 MPa and the deflection amount was 7.00 mm, that is, the molded foam article had high mechanical strength. The appearance was also good.

Example 9

In the same manner as in Example 5, except that 100 parts by weight of those obtained by mixing the resin of No. 3 and the resin of No. 1 described in Table 1 in a weight ratio of 50:50, melting, mixing and ester-interexchanging the mixture (content of IPA unit: 0% by weight, content of CHDM unit: 8.6% by weight) were used as the crystalline aromatic polyester resin and the amount of pyromellitic dianhydride as the modifier was changed to 0.35 parts by weight, prepuffs were produced to obtain a molded foam article.
The melting and mixing for ester interexchange were conducted in the extruder barrel of the above-described extruder for extrusion foaming before injection of butane' as the blowing agent.
The bulk density of the prepuff was 0.14 g/cm$^3$, the particle diameter was from 1.4 to 2.5 mm, the crystallinity was 1.0%, the crystallization peak temperature was 151.2° C, the average cell diameter was 0.43 mm, and the open cell ratio was 16.4%. The melt tension of the resin constituting the prepuff was 1.44 g.
It was confirmed that the apparent density of the resulting molded foam article was 0.14 g/cm$^3$ and the heat shrinkage ratio was 0.2% and that the dimensional stability was good. Its fusion ratio was 93%, and acceptable fusion was exhibited. The bending strength was 1.32 MPa and the deflection amount was 11.2 mm, that is, the molded foam article had high mechanical strength. The appearance was also good.

Example 10

In the same manner as in Example 5, except that 100 parts by weight of those obtained by mixing the resin of No. 2, the resin of No. 3 and the resin of No. 1 described in Table 1 in a weight ratio of 10:5:85, melting, mixing and ester-interexchanging the mixture (content of IPA unit: 0.6% by weight, content of CHDM unit: 0.9% by weight) were used as the crystalline aromatic polyester resin, prepuffs were produced to obtain a molded foam article.
The melting and mixing for ester interexchange were conducted in the extruder barrel of the above-described extruder for extrusion foaming before injection of butane as the blowing agent.
The bulk density of the prepuff was 0.14 g/cm$^3$, the particle diameter was from 1.4 to 2.5 mm, the crystallinity was 4.5%, the crystallization peak temperature was 136.9° C, the average cell diameter was 0.55 mm, and the open cell ratio was 25.6%. The melt tension of the resin constituting the prepuff was 1.02 g.
It was confirmed that the apparent density of the resulting molded foam article was 0.14 g/cm$^3$ and the heat shrinkage ratio was 0.4% and that the dimensional stability was good. Its fusion ratio was 70%, and' acceptable fusion

was exhibited. The bending strength was 1.28 MPa and the deflection amount was 7.65 mm, that is, the molded foam article had high mechanical strength. The appearance was also good.

Example 11

In the same manner as in Example 5, except that 100 parts by weight of those obtained by mixing the resin of No. 2, the resin of No. 3 and the resin of No. 1 described in Table 1 in a weight ratio of 50:25:25, melting, mixing and ester-interexchanging the mixture (content of IPA unit: 2.9% by weight, content of CHDM unit: 4.3% by weight) were used as the crystalline aromatic polyester resin and the amount of pyromellitic dianhydride as the modifier was changed to 0.35 parts by weight, prepuffs were produced to obtain a molded foam article.

The melting and mixing for ester interexchange were conducted in the extruder barrel of the above-described extruder for extrusion foaming before injection of butane as the blowing agent.

The bulk density of the prepuff was 0.14 g/cm$^3$, the particle diameter was from 1.4 to 2.5 mm, the crystallinity was 3.2%, the crystallization peak temperature was 148.8° C, the average cell diameter was 0.46 mm, and the open cell ratio was 19.8%. The melt tension of the resin constituting the prepuff was 1.21 g.

It was confirmed that the apparent density of the resulting molded foam article was 0.14 g/cm$^3$ and the heat shrinkage ratio was 0.3% and that the dimensional stability was good. Its fusion ratio was 90%, and acceptable fusion was exhibited. The bending strength was 1.30 MPa and the deflection amount was 10.5 mm, that is, the molded foam article had high mechanical strength. The appearance was also good.

Comparative Example 2

In the same manner as in Example 5, except that 100 parts by weight of the resin of No. 1 described in Table 1 was used as the crystalline aromatic polyester resin, prepuffs were produced to obtain a molded foam article.

The bulk density of the prepuff was 0.14 g/cm$^3$, the particle diameter was from 1.4 to 2.5 mm, the crystallinity was 9.4%, the crystallization peak temperature was 126.3° C, the average cell diameter was 0.52 mm, and the open cell ratio was 24.3%. The melt tension of the resin constituting the prepuff was 1.12 g.

It was confirmed that the apparent density of the resulting molded foam article was 0.14 g/cm$^3$ and the heat shrinkage ratio was 0.3% and that the dimensional stability was good. However, its fusion ratio was low such as 34%. The bending strength was 0.72 MPa and the deflection amount was 1.40 mm, that is, the molded foam article was also insufficient in mechanical strength. The appearance was also poor.

Comparative Example 3

In the same manner as in Example 5, except that 100 parts by weight of the resin of No. 6 described in Table 1 was used as the crystalline aromatic polyester resin and the amount of pyromellitic dianhydride as the modifier was changed to 0.25 parts by weight, prepuffs were produced to obtain a molded foam article.

The bulk density of the prepuff was 0.14 g/cm$^3$, the particle diameter was from 1.4 to 2.5 mm, the crystallinity was 9.1%, the crystallization peak temperature was 128.0° C, the average cell diameter was 0.43 mm, and the open cell ratio was 14.7%. The melt tension of the resin constituting the prepuff was 1.54 g.

It was confirmed that the apparent density of the resulting molded foam article was 0.14 g/cm$^3$ and the heat shrinkage ratio was 0.2% and that the dimensional stability was good. However, its fusion ratio was low such as 30%. The bending strength was 0.58 MPa and the deflection amount was 1.23 mm, that is, the molded foam article was also insufficient in mechanical strength. The appearance was also poor.

Comparative Example 4

In the same manner as in Example 5, except that 100 parts by weight of those obtained by mixing the resin of No. 2 and the resin of No. 3 described in Table 1 in a weight ratio of 50:50, melting, mixing and ester-interexchanging the mixture (content of IPA unit: 29% by weight, content of CHDM unit: 8.6% by weight, amorphous) were used as the aromatic polyester resin and the amount of pyromellitic dianhydride as the modifier was changed to 0.40 parts by weight, prepuffs were produced to obtain a molded foam article.

The melting and mixing for ester interexchange were conducted in the extruder barrel of the above-described extruder for extrusion foaming before injection of butane as the blowing agent.

The bulk density of the prepuff was 0.14 g/cm$^3$, the particle diameter was from 1.4 to 2.5 mm, the crystallinity was 0%, the crystallization peak temperature was absent, the average cell diameter was 0.45 mm, and the open cell ratio was 18.9%. The melt tension of the resin constituting the prepuff was 1.27 g.

It was confirmed that the apparent density of the resulting molded foam article was 0.14 g/cm$^3$ but the heat

shrinkage ratio was 2.5% and the dimensional stability was poor. Its fusion ratio was 89%, and acceptable fusion was exhibited. The bending strength was large such as 1.29 MPa but the deflection amount was small such as 1.88 mm, that is, the molded foam article was brittle. The appearance was also poor.

The above results are summarized in Table 5 to 7.

Table 5

| | | Aromatic polyester resin | | |
|---|---|---|---|---|
| | | Content of IPA (% by weight) | Content of CHDM (% by weight) | Melt Tension (g) |
| Examples | 5 | 1.4 | 0 | 1.81 |
| | 6 | 5.8 | 0 | 1.21 |
| | 7 | 1.4 | 0 | 1.22 |
| | 8 | 0 | 0.9 | 1.53 |
| | 9 | 0 | 8.6 | 1.44 |
| | 10 | 0.6 | 0.9 | 1.02 |
| | 11 | 2.9 | 4.3 | 1.21 |
| Comp. Examples | 2 | 0 | 0 | 1.12 |
| | 3 | 0 | 0 | 1.54 |
| | 4 | 2.9 | 8.6 | 1.27 |

Table 6

| | | Prepuff | | | | |
|---|---|---|---|---|---|---|
| | | Crystallinity (%) | Bulk Density (g/cm$^3$) | Crystallization Peak temperature (℃) | Average Cell diameter (mm) | Open Cell Ratio (%) |
| Examples | 5 | 4.8 | 0.14 | 135.0 | 0.40 | 10.5 |
| | 6 | 3.0 | 0.14 | 153.9 | 0.47 | 20.2 |
| | 7 | 4.8 | 0.14 | 135.5 | 0.47 | 19.8 |
| | 8 | 2.5 | 0.14 | 136.7 | 0.42 | 13.6 |
| | 9 | 1.0 | 0.14 | 151.2 | 0.43 | 16.4 |
| | 10 | 4.5 | 0.14 | 136.9 | 0.55 | 25.6 |
| | 11 | 3.2 | 0.14 | 148.8 | 0.46 | 19.8 |
| Comp. Examples | 2 | 9.4 | 0.14 | 126.3 | 0.52 | 24.3 |
| | 3 | 9.1 | 0.14 | 128.0 | 0.43 | 14.7 |
| | 4 | 0 | 0.14 | None | 0.45 | 18.9 |

Table 7

| | | Molded article | | | | | |
|---|---|---|---|---|---|---|---|
| | | Fusing Ratio (%) | Bending Strength (MPa) | Deflection Amount (mm) | Apparent Density (g/cm$^3$) | Dimensional stability | Appearance |
| Examples | 5 | 70 | 1.28 | 7.77 | 0.14 | ○ | ○ |
| | 6 | 93 | 1.38 | 12.5 | 0.14 | ○ | ○ |
| | 7 | 65 | 1.24 | 6.54 | 0.14 | ○ | ○ |
| | 8 | 64 | 1.22 | 7.00 | 0.14 | ○ | ○ |
| | 9 | 93 | 1.32 | 11.2 | 0.14 | ○ | ○ |
| | 10 | 70 | 1.28 | 7.65 | 0.14 | ○ | ○ |
| | 11 | 90 | 1.30 | 10.5 | 0.14 | ○ | ○ |
| Comp. Examples | 2 | 34 | 0.72 | 1.40 | 0.14 | ○ | × |
| | 3 | 30 | 0.58 | 1.23 | 0.14 | ○ | × |
| | 4 | 89 | 1.29 | 1.88 | 0.14 | × | × |

Example 12

100 Parts by weight of a resin of No. 7 described in Table 1 as an crystalline aromatic polyester resin, 0.15 parts by weight of pyromellitic dianhydride as a melt tension modifier, and 0.03 parts by weight of sodium carbonate

as an auxiliary modifier were charged in an extruder (extruder bore: 65 mm, L/D ratio: 35) and mixed and melted at a barrel temperature in the range of from 270 to 280 ° C. 1.10 parts by weight of butane (n-butane/isobutane = 7/3) as a blowing agent per 100 part of the mixture was introduced under pressure into the extruder barrel.

Then, the mixture in the molten state was extruded and foamed through each of plural nozzles of a multi-nozzle die (15 nozzles having a diameter of 0.8 mm are disposed on a line) connected to the tip portion of the extruder barrel at a shear rate of 10,438 $sec^{-1}$ (density of molten resin: 1.2 $g/cm^3$), and then cooled immediately in a cooling water bath.

The cooled strand-like foam (foamed extrudate) was sufficiently dehydrated and then cut into generally cylindrical pieces using a pelletizer to produce prepuffs (primary prepuffs).

The bulk density of the primary prepuff was 0.14 $g/cm^3$, the particle diameter was from 2.0 to 3.0 mm, the crystallinity was 4.8%, the crystallization peak temperature was 136.9° C, the average cell diameter was 0.43 mm. The melt tension of the resin constituting the prepuff was 1.33 g.

The primary prepuffs were charged in a sealed container and then maintained for 2 hours for impregnation after injecting a carbon dioxide gas under gauge pressure of 0.49 MPa. Then, the primary prepuffs were taken out from the sealed container and re-expanded for producing secondary prepuffs by heating with a hot air (hot air blowing temperature: 68 ° C) using a pre-expander equipped with a stirring blade.

It was confirmed that the open cell ratio of the secondary prepuff was 11.4% and the bulk density was 0.060 $g/cm^3$ and the crystallinity was 4.8%.

Then, the above secondary prepuffs were charged in a sealed container and maintained for 4 hours for impregnation after injecting a carbon dioxide gas under gauge pressure of 0.49 MPa. A mold cavity having an inner, size of 300 mm × 400 mm × 20 mm, which was formed by: closing male and female mold members, was immediately filled with the secondary prepuffs taken out from the sealed container. The secondary prepuffs were molded(expanded and fused) by introducing steam into the mold cavity through the female mold member under gauge pressure of 0.02 MPa for 10 seconds and then introducing steam into the mold cavity through the both mold members under gauge pressure of 0.06 MPa for 20 seconds.

After maintaining the state for 120 seconds, where introduction of steam was terminated and water-cooling was performed, a molded foam article was removed.

It was confirmed that the apparent density of the resulting molded foam article was 0.060 $g/cm^3$ and the heat shrinkage ratio was 0.8% and that the dimensional stability was good. Its fusion ratio was 85%, and acceptable fusion was exhibited. The appearance was also good.

Example 13

In the same manner as in Example 12, except that 100 parts by weight of the resin of No. 5 described in Table 1 was used as the crystalline aromatic polyester resin and the amount of pyromellitic acid dianhydride as the modifier was changed to 0.20 parts by weight, primary prepuffs, secondary prepuffs and a molded foam article were produced.

The bulk density of the primary prepuff was 0.14 $g/cm^3$, the particle diameter was from 2.0 to 3.0 mm, the crystallinity was 2.7%, the crystallization peak temperature was 136.7° C, and the average cell diameter was 0.51 mm. The melt tension of the resin constituting the prepuff was 1.15 g.

It was confirmed that the open cell ratio of the secondary prepuff was 20.9% and the bulk density was 0.067 $g/cm^3$ and the crystallinity was 2.7%.

It was confirmed that the apparent density of the molded foam article was 0.067 $g/cm^3$ and the heat shrinkage ratio was 0.9% and that the dimensional stability was good. Its fusion ratio was 80%, and acceptable fusion was exhibited. The appearance was also good.

Example 14

In the same manner as in Example 12, except that 100 parts by weight of the resin of No. 2 described in Table 1 was used as the crystalline aromatic polyester resin and the amount of butane (n-butane/isobutane = 7/3) as the blowing agent injected was changed to 1.4 parts by weight per 100 parts of the mixture and that the amount of pyromellitic acid dianhydride as the modifier was changed to 0.25 parts by weight, primary prepuffs, secondary prepuffs and a molded foam article were produced.

The bulk density of the primary prepuff was 0.11 $g/cm^3$, the particle diameter was from 2.2 to 3.0 mm, the crystallinity was 3.2%, the crystallization peak temperature was 153.9° C, and the average cell diameter was 0.47 mm. The melt tension of the resin constituting the prepuff was 1.21 g.

It was confirmed that the open cell ratio of the secondary prepuff was 15.2% and the bulk density was 0.055 $g/cm^3$. The crystallinity was 3.3%.

It was confirmed that the apparent density of the resulting molded foam article was 0.055 $g/cm^3$ and the heat

shrinkage ratio was 0.9% and that the dimensional stability was good. Its fusion ratio was 94%, and acceptable fusion was exhibited. The appearance was also good.

The above results are summarized in Table 8 to 11.

Table 8

| | | Aromatic polyester resin | | |
|---|---|---|---|---|
| | | Content of IPA (% by weight) | Content of CHDM (% by weight) | Melt Tension (g) |
| Examples | 12 | 1.4 | 0 | 1.33 |
| | 13 | 0 | 0.9 | 1.15 |
| | 14 | 5.8 | 0 | 1.21 |

Table 9

| | | Primary prepuff | | | |
|---|---|---|---|---|---|
| | | Crystallinity (%) | Bulk Density ($g/cm^3$) | Crystallization Peak temperature (° C) | Average Cell Diameter (mm) |
| Examples | 12 | 4.8 | 0.14 | 136.9 | 0.43 |
| | 13 | 2.7 | 0.14 | 136.7 | 0.51 |
| | 14 | 3.2 | 0.11 | 153.9 | 0.47 |

Table 10

| | | Secondary prepuff | | |
|---|---|---|---|---|
| | | Crystallinity (%) | Bulk Density ($g/cm^3$) | Open Cell ratio (%) |
| Examples | 12 | 4.8 | 0.060 | 11.4 |
| | 13 | 2.7 | 0.067 | 20.9 |
| | 14 | 3.3 | 0.055 | 15.2 |

Table 11

| | | Molded article | | | |
|---|---|---|---|---|---|
| | | Fusion Ratio (%) | Apparent Density (g/cm3) | Dimensional stability | Appearance |
| Examples | 12 | 85 | 0.060 | ○ | ○ |
| | 13 | 80 | 0.067 | ○ | ○ |
| | 14 | 94 | 0.055 | ○ | ○ |

Example 15

Production of polytetrafluoroethylene resin masterbatch

98 Parts by weight of a resin of No. 4 described in Table 1 as an crystalline aromatic polyester resin and 2 parts by weight of a polytetrafluoroethylene resin (Fluon 169J, manufactured by Asahi Glass Company Ltd.) were charged in an extruder (extruder bore: 40 mm, L/D ratio: 35) and then rendered molten and mixed under the conditions of a screw revolution of 40 rpm and a barrel temperature in the range of from 270 to 280° C.

Then, the mixture in the molten and mixed state was extruded through a multi-nozzle die (8 nozzles having a diameter of 3.0 mm are disposed on a line) connected to the tip portion of a extruder barrel, and then cooled immediately in a cooling water bath.

The cooled strand-like extrudate was sufficiently dehydrated and then cut into generally small granules using a pelletizer to produce a polytetrafluoroethylene resin masterbatch.

Production of prepuffs and molded foam article

100 Parts by weight of the same crystalline aromatic polyester resin as that used in the above polytetrafluoroethylene resin masterbatch, 0.5 parts by weight of polytetrafluoroethylene resin masterbatch, 0.29 parts by weight of pyromellitic dianhydride as a modifier, and 0.03 parts by weight of sodium carbonate as an auxiliary modifier were charged in an extruder (extruder bore: 65 mm, L/D ratio: 35) and mixed and melted at a barrel temperature in the range of from 270 to 290° C. 1.1 parts by weight of butane (n-butane/isobutane = 7/3) as a blowing agent per 100 parts of the mixture was introduced under pressure into the extruder barrel. The amount of the polytetrafluoroethylene resin was 0.010 parts by weight based on 100 parts by weight of the crystalline aromatic polyester resin.
Then, the mixture in the molten state was extruded and foamed through each of plural nozzles of a multi-nozzle die (15 nozzles having a diameter of 1.0 mm are disposed on a line) connected to the tip portion of the extruder barrel, and then cooled immediately in a cooling water bath.
The cooled strand-like foam (foamed extrudate) was sufficiently dehydrated and then cut into generally cylindrical pieces using a pelletizer to produce prepuffs.
The bulk density of the prepuff was 0.14 g/cm$^3$, the particle diameter was from 1.5 to 2.4 mm, the crystallinity was 5.0%, the crystallization peak temperature was 135.0° C, the average cell diameter was 0.20 mm, and the open cell ratio was 6.7%. Its melt tension of the resin constituting the prepuff was 1.82 g.
Then, the prepuffs were charged in a sealed container and then maintained for 4 hours for impregnation after injecting a carbon dioxide gas under gauge pressure of 0.49 MPa. A mold cavity having an inner size of 300 mm × 400 mm × 20 mm, which was formed by closing male and female mold members, was immediately filled with the prepuffs taken out from the sealed container. The prepuffs were molded(expanded and fused) by introducing steam into the mold cavity through the female mold member under gauge pressure of 0.02 MPa for 10 seconds and then introducing steam into the mold cavity through the both mold members under gauge pressure of 0.06 MPa for 20 seconds. After maintaining in the state for 120 seconds, where introduction of steam is terminated and water-cooling was performed, a molded foam article was removed.
It was confirmed that the apparent density of the resulting molded foam article was 0.14 g/cm$^3$ and the heat shrinkage ratio was 0.2% and that the dimensional stability was good. Its fusion ratio was 69%, and acceptable fusion was exhibited. The appearance was particularly good.

Example 16

In the same manner as in Example 15, except that 100 parts by weight of the resin of No. 5 described in Table 1 was used as the crystalline aromatic polyester resin and the amount of the polytetrafluoroethylene resin masterbatch was changed to 4 parts by weight, prepuffs were produced to obtain a molded foam article. The amount of the polytetrafluoroethylene resin was 0.077 parts by weight based on 100 parts by weight of the crystalline aromatic polyester resin.
The bulk density of the prepuff was 0.14 g/cm$^3$, the particle diameter was from 1.5 to 2.4 mm, the crystallinity was 4.2%, the crystallization peak temperature was 136.7° C, the average cell diameter was 0.23 mm, and the open cell ratio was 8.5%. Its melt tension of the resin constituting the prepuff was 1.70 g.
It was confirmed that the apparent density of the resulting molded foam article was 0.14 g/cm$^3$ and the heat' shrinkage ratio was 0.3% and that the dimensional stability was good. Its fusion ratio was 65%, and acceptable fusion was exhibited. The appearance was particularly good.

Example 17

In the same manner as in Example 15, except that 100 parts by weight of the resin of No. 2 described in Table 1 was used as the crystalline aromatic polyester resin, prepuffs were produced to obtain a molded foam article. The amount of the polytetrafluoroethylene resin was 0.010 parts by weight based on 100 parts by weight of the crystalline aromatic polyester resin.
The bulk density of the prepuff was 0.14 g/cm$^3$, the particle diameter was from 1.5 to 2.4 mm, the crystallinity was 3.1%, the crystallization peak temperature was 153.9° C, the average cell diameter was 0.28 mm, and the open cell ratio was 8.3%. Its melt tension of the resin constituting the prepuff was 1.75 g.
It was confirmed that the apparent density of the molded foam article was 0.14 g/cm$^3$ and the heat shrinkage ratio was 0.3% and that the dimensional stability was good. Its fusion ratio was 90%, and acceptable fusion was exhibited. The appearance was particularly good.

Comparative Example 5

In the same manner as in Example 15, except that 100 parts by weight of the resin of No. 1 described in Table 1 was used as the crystalline aromatic polyester resin and any polytetrafluoroethylene resin masterbatch was not mixed, prepuffs were produced to obtain a molded foam article.

The bulk density of the prepuff was 0.14 g/cm$^3$, the particle diameter was from 1.5 to 2.4 mm, the crystallinity was 9.2%, the crystallization peak temperature was 127.2° C, the average cell diameter was 0.55 mm, and the open cell ratio was 8.1%. Its melt tension of the resin constituting the prepuff was 1.85 g.

It was confirmed that the apparent density of the resulting molded foam article was 0.14 g/cm$^3$ and the heat shrinkage ratio was 0.3% and that the dimensional stability was good. However, its fusion ratio was 30% and the fusion was insufficient. The appearance was also poor.

The above results are summarized in Table 12 to 14.

Table 12

| | | Aromatic polyester resin | | |
|---|---|---|---|---|
| | | Content of IPA (% by weight) | Content of CHDM (% by weight) | PTFE (parts by weight) |
| Examples | 15 | 1.4 | 0 | 0.010 |
| | 16 | 0 | 0.9 | 0.077 |
| | 17 | 5.8 | 0 | 0.010 |
| Comp. Example 5 | | 0 | 0 | 0 |

Table 13

| | | Prepuff | | | | |
|---|---|---|---|---|---|---|
| | | Crystallinity (%) | Bulk Density (g/cm$^3$) | Crystallization peak temperature (°C) | Average Cell Diameter (mm) | Open Cell Ratio (%) |
| Examples | 15 | 5.0 | 0.14 | 135.0 | 0.20 | 6.7 |
| | 16 | 4.2 | 0.14 | 136.7 | 0.23 | 8.5 |
| | 17 | 3.1 | 0.14 | 153.9 | 0.28 | 8.3 |
| Comp. Example 5 | | 9.2 | 0.14 | 127.2 | 0.55 | 8.1 |

Table 14

| | | Molded article | | | |
|---|---|---|---|---|---|
| | | Fusion Ratio (%) | Apparent Density ($g/cm^3$) | Dimensional Stability | Appearance |
| Examples | 15 | 69 | 0.14 | ○ | ◎ |
| | 16 | 65 | 0.14 | ○ | ◎ |
| | 17 | 90 | 0.14 | ○ | ◎ |
| Comp. Example 5 | | 30 | 0.14 | ○ | × |

Example 18

100 parts by weight of those obtained by mixing a resin of No. 7 and a resin of No. 2 described in Table 1 in a weight ratio of 75:25, melting, mixing and ester-interexchanging the mixture (content of IPA unit: 2.5% by weight, content of CHDM unit: 0% by weight) as an crystalline aromatic polyester resin, 1 part by weight of the same polytetrafluoroethylene as that used in Example 15, 0.17 parts by weight of pyromellitic dianhydride as a modifier, and 0.03 parts by weight of sodium carbonate as an auxiliary modifier were charged in an extruder (extruder bore: 65 mm, L/D ratio: 35) and mixed and melted at a screw revolution of 50 rpm and a barrel temperature in the range of from 270 to 290° C. 1.1 parts by weight of butane (n-butane/isobutane = 7/3) as a blowing agent per 100 parts of the mixture was introduced under pressure into the extruder barrel. The amount of the polytetrafluoroethylene resin was 0.020 parts by weight based on 100 parts by weight of the crystalline aromatic polyester resin.

The melting and mixing for ester interexchange were conducted in the extruder barrel of the above-described extruder for extrusion foaming before injection of butane as the blowing agent.

Then, the mixture in the molten state was extruded and foamed through each of plural nozzles of a multi-nozzle die (15 nozzles having a diameter of 1.0 mm are disposed on a line) connected to the tip portion of a extruder barrel, and then cooled immediately in a cooling water bath.

The cooled strand-like foam (foamed extrudate) was sufficiently dehydrated and then cut into generally cylindrical pieces using a pelletizer to produce prepuffs.

The bulk density of the prepuff was 0.14 $g/cm^3$, the particle diameter was from 1.5 to 2.4 mm, the crystallinity was 4.0%, the crystallization peak temperature was 138.9° C, the average cell diameter was 0.22 mm, and the open cell ratio was 7.4%. Its melt tension of the resin constituting the prepuff was 1.8 g.

The prepuffs were charged in a sealed container and then maintained for 4 hours for impregnation after injecting a carbon dioxide gas under gauge pressure of 0.49 MPa.

Then, a mold cavity having an inner size of 300 mm × 400 mm × 20 mm, which was formed by closing male and female mold members, was immediately filled with prepuffs taken out from the sealed container. The prepuffs were molded(expanded and fused) by introducing steam into the mold cavity through the female mold member under gauge pressure of 0.02 MPa for 10 seconds and then introducing steam into the mold cavity through the both mold members under gauge pressure of 0.06 MPa for 20 seconds. After maintaining in the state for 120 seconds, where introduction of steam is terminated and water-cooling was performed, a molded foam article was removed.

It was confirmed that the apparent density of the resulting molded foam article was 0.14 $g/cm^3$ and the heat shrinkage ratio was 0.2% and that the dimensional stability was good. Its fusion ratio was 86%, and acceptable fusion was exhibited. The appearance was particularly good. The dimensional change was 0.53% and the heat resistance was also good.

Example 19

In the same manner as in Example 18, except that only isobutane was used as the blowing agent, prepuffs were produced to obtain a molded foam article.

The bulk density of the prepuff was 0.14 $g/cm^3$, the particle diameter was from 1.5 to 2.4 mm, the crystallinity was 3.9%, the crystallization peak temperature was 139.1° C, the average cell diameter was 0.20 mm, and the open cell ratio was 7.0%.

It was confirmed that the apparent density of the resulting molded foam article was 0.14 $g/cm^3$ and the heat shrinkage ratio was 0.2% and that the dimensional stability was good. Its fusion ratio was 84%, and acceptable fusion was exhibited. The appearance was particularly good. The dimensional change was 0.56% and the heat resistance was also good.

Example 20

In the same manner as in Example 18, except that only n-butane was used as the blowing agent, prepuffs were produced to obtain a molded foam article.

The bulk density of the prepuff was 0.14 g/cm$^3$, the particle diameter was from 1.5 to 2.4 mm, the crystallinity was 4.0%, the crystallization peak temperature was 138.8° C, the average cell diameter was 0.22 mm, and the open cell ratio was 7.5%.

It was confirmed that the apparent density of the resulting molded foam article was 0.14 g/cm$^3$ and the heat shrinkage ratio was 0.2% and that the dimensional stability was good. Its fusion ratio was 87%, and acceptable fusion was exhibited. The appearance was particularly good. The dimensional change was 0.53% and the heat resistance was also good.

Example 21

In the same manner as in Example 18, except that propane was used as the blowing agent and its amount injected was 0.9% by weight relative to the mixture of the resin, prepuffs were produced to obtain a molded foam article.

The bulk density of the prepuff was 0.14 g/cm$^3$, the particle diameter was from 1.5 to 2.4 mm, the crystallinity was 3.9%, the crystallization peak temperature was 139.2° C, the average cell diameter was 0.19 mm, and the open cell ratio was 6.2%.

It was confirmed that the apparent density of the resulting molded foam article was 0.14 g/cm$^3$ and the heat shrinkage ratio was 0.1% and that the dimensional stability was good. Its fusion ratio was 85%, and acceptable fusion was exhibited. The appearance was particularly good. The dimensional change was 0.54% and the heat resistance was also good.

Example 22

In the same manner as in Example 18, except that cyclopentane was used as the blowing agent and its amount injected was 1.4% by weight relative to the mixture of the resin, prepuffs were produced to obtain a molded foam article.

The bulk density of the prepuff was 0.14 g/cm$^3$, the particle diameter was from 1.5 to 2.4 mm, the crystallinity was 4.2%, the crystallization peak temperature was 138.7° C, the average cell diameter was 0.25 mm, and the open cell ratio was 8.9%.

It was confirmed that the apparent density of the resulting molded foam article was 0.14 g/cm$^3$ and the heat shrinkage ratio was 0.2% and that the dimensional stability was good. Its fusion ratio was 90%, and acceptable fusion was exhibited. The appearance was particularly good. The dimensional change was 0.51% and the heat resistance was also good.

Example 23

In the same manner as in Example 18, except that CFC 134a was used as the blowing agent and its amount injected was 1.9% by weight relative to the mixture of the resin, prepuffs were produced to obtain a molded foam article.

The bulk density of the prepuff was 0.14 g/cm$^3$, the particle diameter was from 1.5 to 2.4 mm, the crystallinity was 4.0%, the crystallization peak temperature was 138.5° C, the average cell diameter was 0.20 mm, and the open cell ratio was 7.7%.

It was confirmed that the apparent density of the resulting molded foam article was 0.14 g/cm$^3$ and the heat shrinkage ratio was 0.3% and that the dimensional stability was good. Its fusion ratio was 85%, and acceptable fusion was exhibited. The appearance was particularly good. The dimensional change was 0.55% and the heat resistance was also good.

Example 24

In the same manner as in Example 18, except that 100 parts by weight of those obtained by mixing the resin of No. 2, the resin of No. 3 and the resin of No. 1 described in Table 1 in a weight ratio of 50:25:25, melting, mixing and ester-interexchanging the mixture (content of IPA unit: 2.9% by weight, content of CHDM unit: 4.3% by weight) were used as the crystalline aromatic polyester resin and the amount of pyromellitic dianhydride as the modifier was changed to 0.33 parts by weight, prepuffs were produced to obtain a molded foam article.

The melting and mixing for ester interexchange were conducted in the extruder barrel of the above-described extruder for extrusion foaming before injection of butane as the blowing agent.

The bulk density of the prepuff was 0.14 g/cm$^3$, the particle diameter was from 1.5 to 2.4 mm, the crystallinity was 3.2%, the crystallization peak temperature was 148.3° C, the average cell diameter was 0.27 mm, and the open cell ratio was 15.3%. The melt tension of the resin constituting the prepuff was 1.20 g.

It was confirmed that the apparent density of the resulting molded foam article was 0.14 g/cm$^3$ and the heat shrinkage ratio was 0.3% and that the dimensional stability was good. Its fusion ratio was 95%, and acceptable fusion was exhibited. The appearance was particularly good.

Example 25

In the same manner as in Example 18, except that 100 parts by weight of those obtained by mixing the resin of No. 3 and the resin of No. 1 described in Table 1 in a weight ratio of 50:50, melting, mixing and ester-interexchanging the mixture (content of IPA unit: 0% by weight, content of CHDM unit: 8.6% by weight) were used as the crystalline aromatic polyester resin and the amount of pyromellitic dianhydride as the modifier was changed to 0.32 parts by weight and that only normal butane was used as the blowing agent, prepuffs were produced to obtain a molded foam article.

The melting and mixing for ester interexchange were conducted in the extruder barrel of the above-described extruder for extrusion foaming before injection of butane as the blowing agent.

The bulk density of the prepuff was 0.14 g/cm$^3$, the particle diameter was from 1.5 to 2.4 mm, the crystallinity was 1.2%, the crystallization peak temperature was 150.7° C, the average cell diameter was 0.25 mm, and the open cell ratio was 15.9%. The melt tension of the resin constituting the prepuff was 1.44 g.

It was confirmed that the apparent density of the resulting molded foam article was 0.14 g/cm$^3$ and the heat shrinkage ratio was 0.3% and that the dimensional stability was good. Its fusion ratio was 95%, and acceptable fusion was exhibited. The appearance was particularly good.

Example 26

In the same manner as in Example 18, except that 100 parts by weight of the resin of No. 7 described in Table 1 was used as the crystalline aromatic polyester resin, primary prepuffs were produced.

The bulk density of the primary prepuff was 0.14 g/cm$^3$, the particle diameter was from 1.5 to 2.4 mm, the crystallinity was 4.8%, the crystallization peak temperature was 135.4° C, the average cell diameter was 0.20 mm, and the open cell ratio was 6.7%. The melt tension of the resin constituting the prepuff was 1.88 g.

The primary prepuffs were charged in a sealed container and then maintained for 2 hours for impregnation after injecting a carbon dioxide gas under gauge pressure of 0.78 MPa. Then, the primary prepuffs were taken out from the sealed container and re-molded(re-expanded and re-fused) by heating with a hot air (hot air blowing temperature: 68° C) using a drier equipped with a stirring blade.

It was confirmed that the open cell ratio of the resulting secondary prepuff was 11.3% and the bulk density was 0.045 g/cm$^3$ and the crystallinity was 5.0%.

Then, the above secondary prepuffs were charged in a sealed container and maintained for 4 hours for impregnation after injecting a carbon dioxide gas under gauge pressure of 0.49 MPa. A mold cavity having an inner size of 300 mm $\times$ 400 mm $\times$ 20 mm, which was formed by closing male and female mold members, was immediately filled with the secondary prepuffs taken out from the sealed container. The secondary prepuffs were molded (expanded and fused) by introducing steam into the mold under gauge pressure of 0.02 MPa for 10 seconds and then introducing steam under gauge pressure of 0.06 MPa for 20 seconds.

After maintaining in the state for 120 seconds, where introduction of steam was terminated and water-cooling was performed, a molded foam article was removed.

It was confirmed that the apparent density of the resulting molded foam article was 0.048 g/cm$^3$ and the heat shrinkage ratio was 0.9% and that the dimensional stability was good. Its fusion ratio was 71%, and acceptable fusion was exhibited. The appearance was particularly good.

Example 27

In the same manner as in Example 26, except that the same prepuff as that produced in Example 18 was used as the primary prepuff and the gauge pressure of the carbon dioxide gas on secondary foaming was 1.96 MPa, secondary prepuffs were produced to obtain a molded foam article.

It was confirmed that the open cell ratio of the resulting secondary prepuff was 15.9% and the bulk density was 0.031 g/cm$^3$ and the crystallinity was 4.2%.

It was confirmed that the apparent density of the resulting molded foam article was 0.034 g/cm$^3$ and the heat shrinkage ratio was 0.9% and that the dimensional stability was good. Its fusion ratio was 84%, and acceptable fusion

was exhibited. The appearance was particularly good.

The above results are summarized in Table 15 to 18.

Table 15

| | | Aromatic polyester resin | | |
|---|---|---|---|---|
| | | Content of IPA (% by weight) | Content of CHDM (% by weight) | Melt Tension (g) |
| Examples | 18 | 2.5 | 0 | 1.80 |
| | 19 | 2.5 | 0 | 1.80 |
| | 20 | 2.5 | 0 | 1.80 |
| | 21 | 2.5 | 0 | 1.80 |
| | 22 | 2.5 | 0 | 1.80 |
| | 23 | 2.5 | 0 | 1.80 |
| | 24 | 2.9 | 4.3 | 1.20 |
| | 25 | 0 | 8.6 | 1.44 |
| | 26 | 1.4 | 0 | 1.88 |
| | 27 | 2.5 | 0 | 1.80 |

Table 16

| | | (Primary) Prepuff | | | | |
|---|---|---|---|---|---|---|
| | | Crystallinity (%) | Bulk Density ($g/cm^3$) | Crystallization peak temperature (℃) | Average cell diameter (mm) | Open cell ratio (%) |
| Examples | 18 | 4.0 | 0.14 | 138.9 | 0.22 | 7.4 |
| | 19 | 3.9 | 0.14 | 139.1 | 0.20 | 7.0 |
| | 20 | 4.0 | 0.14 | 138.8 | 0.22 | 7.5 |
| | 21 | 3.9 | 0.14 | 139.2 | 0.19 | 6.2 |
| | 22 | 4.2 | 0.14 | 138.7 | 0.25 | 8.9 |
| | 23 | 4.0 | 0.14 | 138.5 | 0.20 | 7.7 |
| | 24 | 3.2 | 0.14 | 148.3 | 0.27 | 15.3 |
| | 25 | 1.2 | 0.14 | 150.7 | 0.25 | 15.9 |
| | 26 | 4.8 | 0.14 | 135.4 | 0.20 | 6.7 |
| | 27 | 4.0 | 0.14 | 138.9 | 0.22 | 7.4 |

Table 17

| | | Secondary prepuff | | |
|---|---|---|---|---|
| | | Crystallinity (%) | Bulk density (g/cm$^3$) | Open cell ratio (%) |
| Examples | 26 | 5.0 | 0.045 | 11.3 |
| | 27 | 4.2 | 0.031 | 15.9 |

Table 18

| | | Molded article | | | | |
|---|---|---|---|---|---|---|
| | | Fusion Ratio (%) | Apparent density (g/cm$^3$) | Heat shrinkage ratio (%) | Appearance | Heat resistance |
| Examples | 18 | 86 | 0.14 | 0.2 | ◎ | ○ |
| | 19 | 84 | 0.14 | 0.2 | ◎ | ○ |
| | 20 | 87 | 0.14 | 0.2 | ◎ | ○ |
| | 21 | 85 | 0.14 | 0.1 | ◎ | ○ |
| | 22 | 90 | 0.14 | 0.2 | ◎ | ○ |
| | 23 | 85 | 0.14 | 0.3 | ◎ | ○ |
| | 24 | 95 | 0.14 | 0.3 | ◎ | – |
| | 25 | 95 | 0.14 | 0.3 | ◎ | – |
| | 26 | 71 | 0.048 | 0.9 | ◎ | – |
| | 27 | 84 | 0.034 | 0.9 | ◎ | – |

Example 28

Production of prepuff

100 Parts by weight of a resin of No. 4 described in Table 1 as an crystalline aromatic polyester resin, 0.3 parts by weight of pyromellitic dianhydride as a modifier, and 0.03 parts by weight of sodium carbonate as an auxiliary modifier were charged in an extruder (extruder bore: 65 mm, L/D ratio: 35) and mixed and melted at a screw revolution 50 rpm and a barrel temperature in the range of from 270° C to 290° C. 1.0 parts by weight of butane (n-butane / isobutane = 7/3) as a blowing agent per 100 parts of the mixture was introduced under pressure into the extruder barrel.
Then, the mixture in the molten state was extruded and foamed through each of plural nozzles of a multi-nozzle die (15 nozzles having a diameter of 0.8 mm are disposed on a line) connected to the tip portion of a extruder barrel, and then cooled immediately in a cooling water bath.
The cooled strand-like foam (foamed extrudate) was sufficiently dehydrated and then cut into generally cylindrical pieces using a pelletizer to produce prepuffs.
The bulk density of the prepuff was 0.14 g/$cm^3$, the particle diameter was from 1.4 to 2.5 mm, the crystallinity was 4.8%, and the crystallization peak temperature was 136.9° C. ,

Production of laminated molded foam article

There was a mold assembly provided for producing a molded foam article of 300 mm in length, 400 mm in width and 20 mm in thickness. An unfoamed PET film having 300 mm in length and 400 mm in width (crystallinity: 4.1%, thickness: 200 μm) was placed in the female mold member of the assembly, its position corresponding to the surface of the same length and width of the molded foam article to be made. After closing the mold, the mold cavity was filled with the prepuffs produced above.
Then, steam was introduced into the mold cavity through the male mold member at 106° C under gauge pressure of 0.02 MPa for 15 seconds and then steam was introduced into the mold cavity through the both mold members at 116° C under gauge pressure of 0.07 MPa for 45 seconds, thereby to mold the prepuffs and laminate the PET film thereto.
After holding for 120 seconds without introduction of steam, the laminated molded foam article was cooled with water finally and the laminated molded foam article was removed.
The laminated molded foam article had high peel strength between the molded foam article and PET film, such as 26.0 N/25 mm. The molded foam article had the fusion ratio between the prepuffs of 70%, and acceptable fusion was exhibited and, at the same time, the falling ball impact value was high such as 43 cm. The molded foam article had high mechanical strength and was superior in impact resistance, and was also superior in appearance because of good surface smoothness. The crystallinity of the molded foam article was 28.6% and that of the PET film was 25.6% and the both had high crystallinity. As is apparent from these results, the laminated molded foam article was not only superior in strength and appearance, but also in heat resistance.

Example 29

Production of prepuff

In the same manner as in Example 28, except that 100 parts by weight of the resin of No.5 described in Table 1 was used, prepuffs were produced.
The bulk density of the prepuff was 0.14 g/$cm^3$, the particle diameter was from 1.4 to 2.5 mm, the crystallinity was 2.5%, and the crystallization peak temperature was 136.7° C.

Production of laminated molded foam article

In the same manner as that described above, the same PET film (crystallinity: 4.1%, thickness: 200 μm) as that used in Example 28 was placed in the assembly and after closing the mold, the mold cavity was filled with the prepuffs produced above.
Then, steam was introduced into the mold cavity through the male mold member at 106° C under gauge pressure of 0.02 MPa for 15 seconds and then steam was introduced into the mold cavity through the both mold members at 122° C under gauge pressure of 0.09 MPa for 45 seconds, thereby to mold the prepuffs and laminate the PET film thereto.
After holding for 120 seconds without introduction of steam, the molded foam article was cooled with water finally and a laminated molded foam article was removed.

The laminated molded foam article had high peel strength between the molded foam article and PET film, such as 25.0 N/25 mm. The molded foam article had the fusion ratio between the prepuffs of 64%, and acceptable fusion was exhibited and, at the same time, the falling ball impact value was high such as 42 cm. The molded foam article had high mechanical strength and was superior in impact resistance, and was also superior in appearance because of good surface smoothness. The crystallinity of the molded foam article was 28.2% and that of the PET film was 28.3% and the both had high crystallinity. As is apparent from these results, the laminated molded foam article was not only superior in strength and appearance, but also in heat resistance.

Example 30

Production of prepuff

In the same manner as in Example 28, except that 100 parts by weight of the resin of No.2 described in Table 1 was used and the amount of pyromellitic dianhydride as the modifier was changed to 0.25 parts by weight, prepuffs were produced.
The bulk density of the prepuff was 0.14 g/cm$^3$, the particle diameter was from 1.4 to 2.5 mm, the crystallinity was 3.0%, and the crystallization peak temperature was 153.9° C.

Production of laminated molded foam article

In the same manner as that described above, the same PET film (crystallinity: 4.1%, thickness: 200 μm) as that used in Example 28 was placed in the assembly and after closing the mold, the mold cavity was filled with the prepuffs produced above.
Then, steam was introduced into the mold cavity through the male mold member at 106° C under gauge pressure of 0.02 MPa for 15 seconds and then steam was introduced into the mold cavity through the both mold members at 112° C under gauge pressure of 0.05 MPa for 45 seconds, thereby to mold the prepuffs and laminate the PET film thereto.
After holding for 120 seconds without introduction of steam, the laminated molded foam article was cooled with water finally and the laminated molded foam article was removed.
The laminated molded foam article had high peel strength between the molded foam article and PET film, such as 28.0 N/25 mm. The molded foam article had its fusion ratio between the prepuffs of 93%, and acceptable fusion was exhibited and, at the same time, the falling ball impact value was high such as 51 cm. The molded foam article had high mechanical strength and was superior in impact resistance, and was also superior in appearance because of good surface smoothness. The crystallinity of the molded foam article was 25.4% and that of the PET film was 25.2% and both had high crystallinity. As is apparent from these results, the laminated molded foam article is not only superior in strength and appearance, but also in heat resistance.

Example 31

In the same manner as in Example 28, except that an unfoamed PET film having a crystallinity of 7.5% and a thickness of 500 μm was used as a film to laminate, a laminated molded foam article was produced.
The laminated molded foam article had high peel strength between the molded foam article and PET film, such as 22.0 N/25 mm. The molded foam article had the fusion ratio between the prepuffs of 70%, and acceptable fusion was exhibited and, at the same time, the falling ball impact value was high such as 75cm. The laminated molded foam article had high mechanical strength and was superior in impact resistance, and was also superior in appearance because of good surface smoothness. The crystallinity of the molded foam article was 28.6% and that of the PET film was 29.6% and both had high crystallinity. As is apparent from these results, the laminated molded foam article is not only superior in strength and appearance, but also in heat resistance.

Example 32

In the same manner as in Example 28, except that an amorphous (crystallinity: 0%) PET film having a thickness of 200 μm was used as a film to laminate, a laminated molded foam article was produced.
The laminated molded foam article had high peel strength between the molded foam article and PET film, such as 32.0 N/25 mm. The molded foam article had its' fusion ratio between the prepuffs of 70%, and acceptable fusion was exhibited and, at the same time, the falling ball impact value was high such as 44cm. The laminated molded foam article had high mechanical strength and was superior in impact resistance, and was also superior in appearance because of good surface smoothness.

Example 33

In the same manner as in Example 29, except that a foamed sheet of an crystalline aromatic polyester resin synthesized by the polycondensation reaction of ethylene glycol, isophthalic acid and terephthalic acid (content of IPA unit: 0.8% by weight, crystallinity: 7.0%, thickness: 1.0 mm, apparent density: 0.2 g/$cm^3$) was fit with the mold cavity, a laminated molded foam article was produced.
The laminated molded foam article had high peel strength between the molded foam article and PET film, such as 22.0 N/25 mm. The molded foam article had the fusion ratio between the prepuffs of 64%, and acceptable fusion was exhibited and, at the same time, the falling ball impact value was high such as 41 cm. The laminated molded foam article had high mechanical strength and was superior in impact resistance, and was also superior in appearance because of good surface smoothness. The crystallinity of the molded foam article was 28.2% and that of the PET film was 28.5% and both had high crystallinity. As is apparent from these results, the laminated molded foam article is not only superior in; strength and appearance, but also in heat resistance.

Example 34

In the same manner as in Example 33, except that a foamed sheet of a PET resin synthesized by the polycondensation reaction of ethylene glycol and terephthalic acid (crystallinity: 12.3%, thickness: 1.0 mm, apparent density: 0.2 g/$cm^3$) was used as the foamed sheet, a laminated molded foam article was produced.
The laminated molded foam article had high peel strength between the molded foam article and PET film, such as 18.0 N/25 mm. The molded foam article had its fusion ratio between the prepuffs of 64%, and acceptable fusion was exhibited and, at the same time, the falling ball impact value was high such as 39 cm. The laminated molded foam article had high mechanical strength and was superior in impact resistance, and was also superior in appearance because of good surface smoothness. The crystallinity of the molded foam article was 28.2% and that of the PET film was 30.6% and both had high crystallinity. As is apparent from these results, the laminated molded foam article is not only superior in strength and appearance, but also in heat resistance.

Comparative Example 6

In the same manner as in Example 28, except that 100 parts by weight of the resin of No. 1 described in Table 1 was used as the crystalline aromatic polyester resin, prepuffs were produced.
The bulk density of the prepuff was 0.14 g/$cm^3$, the particle diameter was from 1.4 to 2.5mm, the crystallinity was 9.4%, and the crystallization peak temperature was 126.3° C.
In the same manner as in Example 28, except that the above prepuff was used, a laminated molded foam article was produced.
The laminated molded foam article had low peel strength between the molded foam article and PET film, such as 3.0 N/25 mm. The molded foam article had its fusion ratio between the prepuffs of 34%, and acceptable fusion was not exhibited. The surface smoothness was good and the appearance was excellent, but the falling ball impact value was low such as 24 cm. Also the mechanical strength was insufficient and the impact resistance was poor.

Comparative Example 7

In the same manner as in Example 28, except that an unfoamed PET film having a crystallinity of 25.0% and a thickness of 200 μm was used as a film to laminate, a trial of producing a laminated molded foam article was made. However, the laminated molded foam article could not be produced because the molded foam article and PET film were not fused each other.
The above results are summarized in Table 19 to 22, together with the results of a single molded foam article (Conventional Example 1) obtained by conducting molding under the same conditions as in Example 1 using the same prepuff as that used in Example 1.

Table 19

| | | Aromatic polyester resin | |
|---|---|---|---|
| | | Content of IPA (% by weight) | Content of CHDM (% by weight) |
| Examples | 28 | 1.4 | 0 |
| | 29 | 0 | 0.9 |
| | 30 | 5.8 | 0 |
| | 31 | 1.4 | 0 |
| | 32 | 1.4 | 0 |
| | 33 | 0 | 0.9 |
| | 34 | 0 | 0.9 |
| Comp. Examples | 6 | 0 | 0 |
| | 7 | 1.4 | 0 |
| Conventional Example 1 | 1 | 1.4 | 0 |

Table 20

| | | Prepuff | | | Film or sheet | |
|---|---|---|---|---|---|---|
| | | Crystallinity (%) | Bulk density (g/cm$^3$) | Crystallization peak temperature (℃) | Kind | Crystallinity (%) |
| Examples | 28 | 4.8 | 0.14 | 136.9 | Film | 4.1 |
| | 29 | 2.5 | 0.14 | 136.7 | Film | 4.1 |
| | 30 | 3.0 | 0.14 | 153.9 | Film | 4.1 |
| | 31 | 4.8 | 0.14 | 136.9 | Film | 7.5 |
| | 32 | 4.8 | 0.14 | 136.9 | Film | 0 |
| | 33 | 2.5 | 0.14 | 136.7 | Foamed sheet | 7.0 |
| | 34 | 2.5 | 0.14 | 136.7 | Foamed sheet | 12.3 |
| Comp. Examples | 6 | 9.4 | 0.14 | 126.3 | Film | 4.1 |
| | 7 | 4.8 | 0.14 | 136.9 | Film | 25.0 |
| Conventional Example 1 | | 4.8 | 0.14 | 136.9 | None | - |

Table 21

| | | Laminated molded foam article | | |
|---|---|---|---|---|
| | | Peel Strength (N/25 mm) | Fallingball impact value (cm) | Surface smoothness |
| Examples | 28 | 26.0 | 43 | ○ |
| | 29 | 25.0 | 42 | ○ |
| | 30 | 28.0 | 51 | ○ |
| | 31 | 22.0 | 75 | ○ |
| | 32 | 32.0 | 44 | ○ |
| | 33 | 22.0 | 41 | ○ |
| | 34 | 18.0 | 39 | ○ |
| Comp. Examples | 6 | 3.0 | 24 | ○ |
| | 7 | — | — | — |
| Conventional Example 1 | | — | 20 | — |

Table 22

| | | Laminated molded foam article | | |
|---|---|---|---|---|
| | | Molded article | | Crystallinity of film or sheet (%) |
| | | Fusion Ratio (%) | Crystallinity (%) | |
| Examples | 28 | 70 | 28.6 | 25.6 |
| | 29 | 64 | 28.2 | 28.3 |
| | 30 | 93 | 25.4 | 25.2 |
| | 31 | 70 | 28.6 | 29.6 |
| | 32 | 70 | 28.6 | 0 |
| | 33 | 64 | 28.2 | 28.5 |
| | 34 | 64 | 28.2 | 30.6 |
| Comp. Examples | 6 | 34 | 28.6 | - |
| | 7 | 70 | 28.6 | - |
| Conventional Example 1 | | 70 | 28.6 | - |

## Claims

1. A moldable, crystalline aromatic polyester resin prepuff in the form of particles, **characterized in that** its bulk density is in the range of from 0.01 to 1.0 g/cm$^3$, its crystallization peak temperature is in the range of from 130 to 180°C, and its crystallinity is in the range of from 1 to 6%, wherein the crystalline aromatic polyester resin contains at least one unit of a unit derived from isophthalic acid or a unit derived from 1,4-cyclohexanedimethanol in a total amount ranging from 0.6 to 9% by weight.

2. The crystalline aromatic polyester resin prepuff according to claim 1, wherein the crystalline aromatic polyester resin is blended with a polytetrafluoroethylene resin in an amount ranging from 0.005 to 0.1 parts by weight based on 100 parts by weight of the crystalline aromatic polyester resin.

3. The crystalline aromatic polyester resin prepuff according to claim 1 or 2, which is obtainable by cutting a foamed extrudate.

**4.** The crystalline aromatic polyester resin prepuff according to claim 3, which is formed into a generally cylindrical shape, obtainable by cutting the foamed extrudate into pieces having a predetermined length, the foamed extrudate having a strand shape.

**5.** The crystalline aromatic polyester resin prepuff according to claim 4, which is obtainable by extruding in the state where the melt tension of the crystalline aromatic polyester resin is maintained to be in the range of from 0.7 to 3.0 g in the presence of a melt tension modifier.

**6.** The crystalline aromatic polyester resin prepuff according to claim 5, wherein its open cell ratio is in the range of from 5 to 35%.

**7.** The crystalline aromatic polyester resin prepuff, **characterized in that** its bulk density is adjusted by conducting a step of further impregnating the prepuff of any one of claims 3 to 6 with a gas under pressure at least one time and re-expanding the prepuff prior to molding.

**8.** A molded foam article, **characterized in that** said article is obtainable by filling a mold cavity formed by closing male and female molds of a mold with the crystalline aromatic polyester resin prepuffs of any one of claims 1 to 7, and by heating to further expand and fuse the prepuffs in the mold cavity.

**9.** The molded foam article according to claim 8, wherein its apparent density is in the range of from 0.01 to 1.0 $g/cm^3$ and its fusion ratio being not less than 40%.

**10.** A laminated molded foam article, **characterized in that** said article comprises the molded foam article of claim 8 or 9 and a film or sheet of an aromatic polyester resin.

**11.** The laminated molded foam article according to claim 10, wherein its peel strength of the film or sheet from the molded foam article is not less than 5 N/25 mm.

**12.** A process for preparing a laminated molded foam article according to claim 10 or 11, comprising the steps (1) to (4):

step (1) of placing a film or sheet at least in a male mold and/or in a female mold of a mold,
step (2) of closing the male and female molds,
step (3) of filling the mold cavity with the crystalline aromatic polyester resin prepuff of any one of claims 1 to 7, and
step (4) of heating thereby to conduct molding and laminating in one step.

**13.** A process for preparing the moldable, crystalline aromatic polyester prepuff according to any of claims 1 to 7, comprising the steps of

- mixing a crystalline aromatic polyester resin with a blowing agent in a molten state under pressure using an extruder,
- extrusion foaming the mixture, and
- cutting the foamed extrudate.

**14.** A process for preparing the molded foam article according to any of claims 8 and 9, comprising the steps of filling a mold cavity formed by closing male and female molds of a mold with the crystalline aromatic polyester resin prepuffs of any one of claims 1 to 7, and heating to further expand and fuse the prepuffs in the mold cavity.

## Patentansprüche

**1.** Formbarer vorgeschäumter Gegenstand aus kristallinem aromatischem Polyesterharz in Form von Teilchen, **dadurch gekennzeichnet, daß** seine Schüttdichte im Bereich von 0,01 bis 1,0 $g/cm^3$ ist, seine Kristallisationspeaktemperatur im Bereich von 130 bis 180°C ist und seine Kristallinität im Bereich von 1 bis 6 % ist, worin das kristalline aromatische Polyesterharz zumindest eine Einheit aus einer von Isophthalsäure abgeleiteten Einheit oder einer von 1,4-Cyclohexandimethanol abgeleiteten Einheit in einer Gesamtmenge, die sich von 0,6 bis 9 Gew.% bewegt, enthält.

**2.** Vorgeschäumter Gegenstand aus kristallinem aromatischem Polyesterharz gemäß Anspruch 1, worin das kristalline aromatische Polyesterharz mit einem Polytetrafluorethylenharz in einer Menge, die sich von 0,005 bis 0,1 Gew.Teile, basierend auf 100 Gew.Teilen des kristallinen aromatischen Polyesterharzes, bewegt, gemischt wird.

**3.** Vorgeschäumter Gegenstand aus kristallinem aromatischem Polyesterharz gemäß Anspruch 1 oder 2, der durch Schneiden eines geschäumten Extrudats erhältlich ist.

**4.** Vorgeschäumter Gegenstand aus kristallinem aromatischem Polyesterharz gemäß Anspruch 3, der in eine allgemein zylindrische Form geformt ist, erhältlich durch Schneiden des geschäumten Extrudats in Stücke mit einer vorbestimmten Länge, wobei das geschäumte Extrudat eine Strangform hat.

**5.** Vorgeschäumter Gegenstand aus kristallinem aromatischem Polyesterharz gemäß Anspruch 4, der durch Extrudieren in dem Zustand, wo die Schmelzspannung des kristallinen aromatischen Polyesterharzes im Bereich von 0,7 bis 3,0 g in Gegenwart eines Schmelzspannungsmodifikators gehalten wird, erhältlich ist.

**6.** Vorgeschäumter Gegenstand aus kristallinem aromatischem Polyesterharz gemäß Anspruch 5, worin sein Offenzellverhältnis im Bereich von 5 bis 35 % ist.

**7.** Vorgeschäumter Gegenstand aus kristallinem aromatischem Polyesterharz, **dadurch gekennzeichnet, daß** seine Schüttdichte durch Durchführen eines Schrittes des weiteren Imprägnierens des vorgeschäumten Gegenstands gemäß einem der Ansprüche 3 bis 6 mit einem Gas unter Druck zumindest einmal und Wiederexpandieren des vorgeschäumten Gegenstands vor dem Formen eingestellt wird.

**8.** Geformter Schaumgegenstand, **dadurch gekennzeichnet, daß** der Gegenstand erhältlich ist durch Füllen eines durch Schließen männlicher und weiblicher Formen einer Form gebildeten Formhohlraums mit den vorgeschäumten Gegenständen aus kristallinem aromatischem Polyesterharz gemäß einem der Ansprüche 1 bis 7 und Erwärmen, um die vorgeschäumten Gegenstände in dem Formhohlraum weiter zu expandieren und zu verschmelzen.

**9.** Geformter Schaumgegenstand gemäß Anspruch 8, worin seine scheinbare Dichte im Bereich von 0,01 bis 1,0 $g/cm^3$ ist und sein Verschmelzungsverhältnis nicht weniger als 40 % ist.

**10.** Laminierter geformter Schaumgegenstand, **dadurch gekennzeichnet, daß** der Gegenstand den geformten Schaumgegenstand aus Anspruch 8 oder 9 und einen Film oder eine Bahn aus einem aromatischen Polyesterharz umfaßt.

**11.** Laminierter geformter Schaumgegenstand gemäß Anspruch 10, dessen Schälfestigkeit des Films oder der Bahn von dem geformten Schaumartikel nicht weniger als 5 N/25 mm ist.

**12.** Verfahren zur Herstellung eines laminierten geformten Schaumgegenstands gemäß Anspruch 10 oder 11, umfassend die Schritte (1) bis (4):

Schritt (1) des Anordnens eines Films oder einer Bahn zumindest in der männlichen Form und/oder in der weiblichen Form einer Form,

Schritt (2) des Schließens der männlichen und weiblichen Formen,

Schritt (3) des Füllens des Formhohlraums mit den vorgeschäumten Gegenständen aus kristallinem aromatischem Polyesterharz gemäß einem der Ansprüche 1 bis 7, und

Schritt (4) des Erwärmens, um **dadurch** Formen und Laminieren in einem Schritt durchzuführen.

**13.** Verfahren zur Herstellung des formbaren vorgeschäumten Gegenstands aus kristallinem aromatischem Polyesterharz gemäß einem der Ansprüche 1 bis 7, umfassend die Schritte:

- Mischen eines kristallinen aromatischen Polyesterharzes mit einem Blasmittel in geschmolzenem Zustand unter Druck unter Verwendung eines Extruders,
- Extrusionsschäumen der Mischung und
- Schneiden des geschäumten Extrudats.

14. Verfahren zur Herstellung des geformten Schaumgegenstands gemäß einem der Ansprüche 8 und 9, umfassend die Schritte des Füllens eines durch Schließen von männlichen und weiblichen Formen einer Form gebildeten Formhohlraums mit den vorgeschäumten Gegenständen aus kristallinem aromatischem Polyesterharz gemäß einem der Ansprüche 1 bis 7 und Erwärmen, um die vorgeschäumten Gegenstände in dem Formhohlraum weiter zu expandieren und zu verschmelzen.

## Revendications

1. Pré-expansé d'une résine de polyester aromatique cristallin moulable sous forme de particules, **caractérisé en ce que** sa masse volumique est dans la gamme de 0,01 à 1,0 g/cm$^3$, sa température de pic de cristallisation est dans la gamme de 130 à 180°C et sa cristallinité est dans la gamme de 1 à 6 %, dans lequel la résine de polyester aromatique cristallin contient au moins un motif dérivé de l'acide isophtalique ou un motif dérivé du 1,4-cyclohexanediméthanol dans une quantité totale de 0,6 à 9 % en poids.

2. Pré-expansé d'une résine de polyester aromatique cristallin selon la revendication 1, dans lequel la résine de polyester aromatique cristallin est mélangée avec une résine de polytétrafluoroéthylène dans une quantité s'échelonnant de 0,005 à 0,1 partie en poids, pour 100 parties en poids de la résine de polyester aromatique cristallin.

3. Pré-expansé d'une résine de polyester aromatique cristallin selon la revendication 1 ou 2, qui est susceptible d'être obtenu par découpage d'un extrudat expansé.

4. Pré-expansé d'une résine de polyester aromatique cristallin selon la revendication 3, qui est transformé en une forme généralement cylindrique, susceptible d'être obtenu par découpage de l'extrudat expansé en morceaux ayant une longueur prédéterminée, l'extrudat expansé ayant la forme d'un filament.

5. Pré-expansé d'une résine de polyester aromatique cristallin selon la revendication 4, qui est susceptible d'être obtenu par extrusion dans un état où la tension en fusion de la résine de polyester aromatique cristallin est maintenue de façon à se situer dans la gamme de 0,7 à 3,0 g en présence d'un agent de modification de la tension en fusion.

6. Pré-expansé d'une résine de polyester aromatique cristallin selon la revendication 5, dans lequel son rapport de cellules ouvertes est dans la gamme de 5 à 35 %.

7. Pré-expansé d'une résine de polyester aromatique cristallin, **caractérisé en ce que** sa masse volumique apparente est ajustée par réalisation d'une étape d'imprégnation supplémentaire du pré-expansé selon l'une quelconque des revendications 3 à 6 avec un gaz sous pression au moins une fois et par une nouvelle expansion du pré-expansé avant le moulage.

8. Article en mousse moulé, **caractérisé en ce que** ledit article est susceptible d'être obtenu par remplissage de la cavité d'un moule formé par des moules de fermeture mâle et femelle d'un moule avec les pré-expansés de résine de polyester aromatique cristallin selon l'une quelconque des revendications 1 à 7, et par chauffage pour dilater davantage et faire fondre les pré-expansés dans la cavité du moule.

9. Article en mousse moulé selon la revendication 8, dans lequel sa masse volumique apparente est dans la gamme de 0,01 à 1,0 g/cm$^3$ et son rapport de fusion n'est pas inférieur à 40 %.

10. Article en mousse moulé stratifié, **caractérisé en ce que** ledit article comprend l'article en mousse moulé selon la revendication 8 ou 9 et un film ou une feuille d'une résine de polyester aromatique.

11. Article en mousse moulé stratifié selon la revendication 10, dans lequel sa résistance au décollement du film ou de la feuille de l'article en mousse moulé est non inférieure à 5 N/25 mm.

12. Procédé de préparation d'un article en mousse moulé stratifié selon la revendication 10 ou 11; comprenant les étapes (1) à (4) :

étape (1) de mise en place d'un film ou d'une feuille au moins dans un moule mâle et/ou dans un moule femelle d'un moule,

étape (2) de fermeture des moules mâle et femelle,
étape (3) de remplissage de la cavité du moule avec le pré-expansé de résine de polyester aromatique cristallin selon l'une quelconque des revendications 1 à 7, et
étape (4) de chauffage afin de réaliser un moulage et une stratification en une seule étape.

**13.** Procédé de préparation du pré-expansé de polyester aromatique cristallin moulable selon l'une quelconque des revendications 1 à 7, comprenant les étapes de

- mélange d'une résine de polyester aromatique cristallin avec un agent gonflant dans un état fondu sous pression dans une extrudeuse,
- expansion par extrusion du mélange, et
- découpage de l'extrudat expansé.

**14.** Procédé de préparation d'un article en mousse moulé selon l'une quelconque des revendications 8 et 9, comprenant les étapes de remplissage de la cavité d'un moule formé par fermeture de moules mâle et femelle d'un moule avec les pré-expansés de résine de polyester aromatique cristallin selon l'une quelconque des revendications 1 à 7, et de chauffage afin de dilater davantage et de faire fondre les pré-expansés dans la cavité du moule.